(19) Europäisches Patentamt
European Patent Office
Office européen des brevets

(11) Veröffentlichungsnummer: **0 315 585 B1**

(12) **EUROPÄISCHE PATENTSCHRIFT**

(45) Veröffentlichungstag der Patentschrift: **02.12.92**

(51) Int. Cl.[5]: **C09B 62/507**, C09B 62/08, D06P 3/66

(21) Anmeldenummer: **88810633.3**

(22) Anmeldetag: **15.09.88**

# (54) Reaktivfarbstoffe, deren Herstellung und Verwendung.

(30) Priorität: **03.11.87 CH 4293/87**

(43) Veröffentlichungstag der Anmeldung:
**10.05.89 Patentblatt 89/19**

(45) Bekanntmachung des Hinweises auf die Patenterteilung:
**02.12.92 Patentblatt 92/49**

(84) Benannte Vertragsstaaten:
**BE CH DE ES FR GB IT LI**

(56) Entgegenhaltungen:
**EP-A- 0 278 904**
**WO-A-87/01123**

(73) Patentinhaber: **CIBA-GEIGY AG**
**Klybeckstrasse 141**
**CH-4002 Basel(CH)**

(72) Erfinder: **Tzikas, Athanassios, Dr.**
**Muttenzerstrasse 78**
**CH-4133 Pratteln(CH)**

**EP 0 315 585 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Anmeldung betrifft neue verbesserte Reaktivfarbstoffe, die sich besonders für das Färben von cellulosehaltigen Fasermaterialien nach dem Ausziehverfahren oder nach Kontinueverfahren eignen, und die nass- und lichtechte Färbungen ergeben; sowie Verfahren zur Herstellung dieser Farbstoffe, und deren Verwendung zum Färben oder Bedrucken von textilen Materialien.

Aus der PCT-Anmeldung WO 87/01123 und der EPA 0 287 515 sind Triazinyl-Reaktivfarbstoffe bekannt, welche ein Aminophenyl-Brückenglied zwischen einem Triazinrest und einer Azogruppe aufweisen. Das Brückenglied kann darüberhinaus noch weiter substituiert sein, wobei Sulfonsäurereste bevorzugt sind. Im Unterschied zur vorliegenden Erfindung werden jedoch keine Brückenglieder beschrieben, die sich von einer 1,3-Diamino-benzol-4,6-disulfonsäure ableiten.

Gegenstand der Erfindung sind Reaktivfarbstoffe der Formel

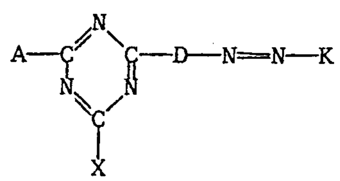

(1),

worin D ein Rest der Formel

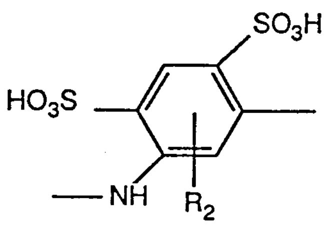

(2)

wobei der Triazinrest in Formel (1) an die -NH- Gruppe von D gebunden ist; $R_2$ Wasserstoff, $C_{1-4}$-Alkyl, $C_{1-4}$-Alkoxy, Halogen oder Carboxy;

K ein Rest der Formel

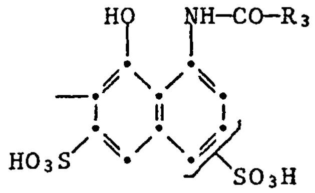

(3a),

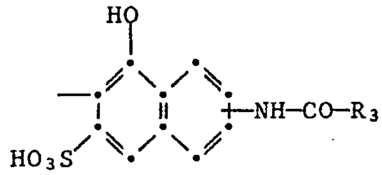

(3b),

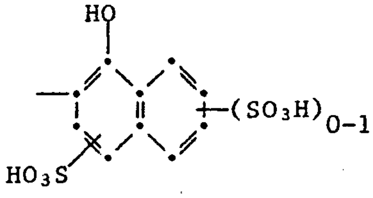

(3c),

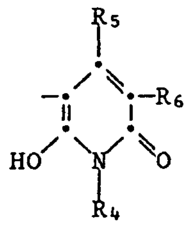

(3d),

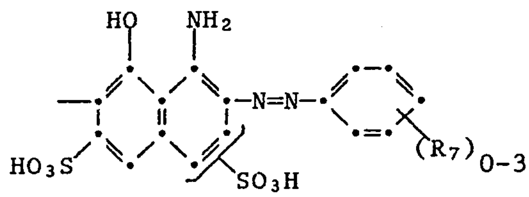

oder (3e),

$R_3$ $C_{1-4}$-Alkyl, das durch Halogen, Hydroxy, Cyan, $C_{1-4}$-Alkoxy, $C_{1-4}$-Alkoxycarbonyl, Carboxy, Sulfamoyl, Sulfo oder Sulfato substituiert sein kann, 2-Carboxyvinyl, Phenyl, das durch $C_{1-4}$-Alkyl, $C_{1-4}$-Alkoxy, Nitro, Halogen, Carbamoyl, Carboxy oder Sulfo substituiert sein kann, Phenyl-$C_{1-4}$-alkyl oder Phenoxy-$C_{1-4}$-alkyl; $R_4$ Wasserstoff oder $C_{1-4}$-Alkyl, das durch Hydroxy oder -$NH_2$ substituiert sein kann; $R_5$ Wasserstoff oder $C_{1-4}$-Alkyl; und $R_6$ Wasserstoff, Cyan, Carbamoyl, Carboxy oder Sulfomethyl ist; $R_7$ für 0 bis 3 Substituenten aus der Gruppe $C_{1-4}$-Alkyl, $C_{1-4}$-Alkoxy, Halogen, Nitro, Carbamoyl, Sulfamoyl, Carboxy, Sulfo, Sulfomethyl und einem der unten definierten Reste der Formel -$SO_2$-Z, unabhängig voneinander, steht; X Fluor, Chlor, Brom, Sulfo, $C_{1-4}$-Alkylsulfonyl, Phenylsulfonyl oder Carboxypyridinium; A ein Rest der Formel

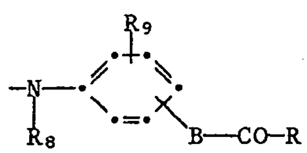

(4),

$R_8$ Wasserstoff oder Alkyl mit 1 bis 4 Kohlenstoffatomen, das durch Halogen, Hydroxy, Cyan, $C_{1-4}$-Alkoxy, $C_{1-4}$-Alkoxycarbonyl, Carboxy, Sulfamoyl, Sulfo oder Sulfato substituiert sein kann; $R_9$ Wasserstoff, $C_{1-4}$-Alkyl, $C_{1-4}$-Alkoxy, Halogen, Carboxy oder Sulfo; B eine direkte Bindung;
R ein Rest der Formel

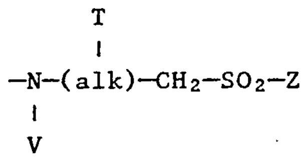 (5a),

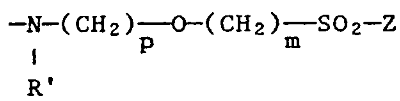 (5b),

$-NH-(alk')-NH-(alk')-SO_2-Z$ (5c),

oder 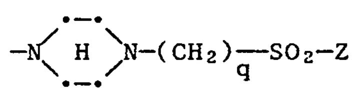 (5d),

Z β-Sulfatoäthyl, β-Thiosulfatoäthyl, β-Phosphatoäthyl, β-Acyloxyäthyl, β-Halogenäthyl oder Vinyl; alk ein Alkylenrest mit 1 bis 7 C-Atomen oder dessen verzweigte Isomere; T Wasserstoff, Chlor, Brom, Fluor, Hydroxy, Sulfato, Acyloxy mit 1 bis 4 C-Atomen, Cyano, Carboxy, Alkoxycarbonyl mit 1 bis 5 C-Atomen, Carbamoyl, oder ein Rest $-SO_2-Z$, worin Z die oben angegebene Bedeutung hat;
V Wasserstoff oder ein Alkylrest mit 1 bis 4 C-Atomen, der durch Carboxy- oder Sulfogruppen oder durch deren Derivate, Alkoxygruppen mit 1 oder 2 C-Atomen, Halogen oder Hydroxy substituiert sein kann; oder ein Rest

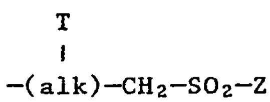 (5e),

worin Z, alk und T die angegebenen Bedeutungen haben; R' Wasserstoff oder $C_{1-6}$-Alkyl; alk' unabhängig voneinander Polymethylenreste mit 2 bis 6 C-Atomen oder deren verzweigte Isomere; und m = 1 bis 6, p = 1 bis 6 und q = 1 bis 6 ist, oder A ein direkt an den Triazinring gebundener Rest der Formel (5a), (5b), (5c) oder (5d) ist, worin Z, alk, T, V, R', alk', m, p und q die angegebenen Bedeutungen haben.

Als Beispiele für den Substituenten $R_2$, sofern dieser als $C_{1-4}$-Alkyl, $C_{1-4}$-Alkoxy oder Halogen definiert ist, seien im einzelnen genannt: Methyl, Aethyl, Propyl, Isopropyl, Butyl, Isobutyl, sec.-Butyl, tert.-Butyl, Methoxy, Aethoxy, Propyloxy, Isopropyloxy, Butyloxy, Isobutyloxy, sec.-Butyloxy, tert.-Butyloxy, Fluor, Chlor und Brom. Bevorzugt sind Methyl, Aethyl, Methoxy, Aethoxy und Chlor.

Der Rest $R_3$ ist, falls es sich um einen Alkylrest handelt, geradkettig oder verzweigt; er kann weitersubstituiert sein, z.B. durch Halogen, Hydroxy, Cyan, $C_{1-4}$-Alkoxy, $C_{1-4}$-Alkoxycarbonyl, Carboxy, Sulfamoyl, Sulfo oder Sulfato. Als Beispiele für $R_3$ seien die folgenden Reste genannt: Methyl, Aethyl, Propyl, Isopropyl, Butyl, Isobutyl, sek.-Butyl, tert.-Butyl, Carboxymethyl, β-Carboxyäthyl, β-Carboxypropyl, Methoxycarbonylmethyl, Aethoxycarbonylmethyl, β-Methoxyäthyl, β-Aethoxyäthyl, β-Methoxypropyl, β-Chloräthyl, γ-Brompropyl, β-Hydroxyäthyl, β-Hydroxybutyl, β-Cyanäthyl, Sulfomethyl, β-Sulfoäthyl, Aminosulfonylmethyl und β-Sulfatoäthyl. Vorzugsweise ist $R_3$ Wasserstoff, Methyl oder Aethyl.

Falls $R_3$ Phenyl ist, kann dieses z.B. durch Methyl, Aethyl, Methoxy, Aethoxy, Chlor oder Carboxy substituiert sein. Weitere Beispiele für $R_3$ sind: Benzyl, Phenäthyl, Phenoxymethyl und Phenoxyäthyl.

$R_4$ ist beispielsweise Methyl, Aethyl, Propyl, Isopropyl, Butyl, Isobutyl, sek.-Butyl, tert.-Butyl, β-Hydroxyäthyl oder β-Aminoäthyl. Vorzugsweise ist $R_4$ Aethyl.

Für $R_5$ kommen ausser Wasserstoff die oben unter $R_4$ genannten unsubstituierten Alkylreste in Betracht. Vorzugsweise ist $R_5$ Methyl.

Beispiele für $R_7$, sofern dieses $C_{1-4}$-Alkyl, $C_{1-4}$-Alkoxy oder Halogen ist, sind die oben unter $R_2$ genannten Substituenten. Vorzugsweise ist $R_7$ Sulfo, ein Rest $-SO_2-Z$ oder einer der Reste der Formeln (5a) bis (5d).

Der abspaltbare Substituent X ist ein Halogenatom, wie Fluor, Chlor oder Brom, eine niedrig-molekulare Alkylsulfonylgruppe, wie Methylsulfonyl oder Aethylsulfonyl, der Phenylsulfonylrest, die Sulfogruppe oder

ein Carboxypyridiniumion, z.B. 3-Carboxypyridinium. Vorzugsweise ist X Fluor oder Chlor.

Als Beispiele für $R_8$ kommen die gleichen Alkyl-Rest in Betracht, die oben unter $R_3$ angegeben sind. Vorzugsweise ist $R_8$ Wasserstoff.

Der Rest $R_9$ kann z.B. Methyl, Aethyl, Methoxy, Aethoxy, Chlor, Carboxy oder Sulfo sein. Vorzugsweise ist $R_9$ Wasserstoff.

Alle Reste $R_2$ bis $R_9$ sind voneinander unabhängig.

B ist eine direkte Bindung.

Als β-Halogenäthyl kommt für Z insbesondere der β-Chloräthylrest und als β-Acyloxyäthyl insbesondere der β-Acetoxyäthylrest in Betracht. Der Alkylenrest alk ist vorzugsweise Methylen, Aethylen, Methylmethylen, Propylen, Butylen oder Pentylen. Der Substituent T ist als Acyloxyrest insbesondere Acetyloxy, Propionyloxy oder Butyryloxy, und als Alkoxycarbonylrest insbesondere Methoxycarbonyl, Aethoxycarbonyl oder Propyloxycarbonyl. Falls V ein Alkylrest ist, kann dieser Methyl, Aethyl, Propyl, Isopropyl, Butyl, Isobutyl, sec-Butyl oder tert-Butyl sein. Derivate der Carboxy- oder Sulfogruppe sind z.B. Carbamoyl, N-Methyl-, N-Aethyl-, N,N-Dimethyl- und N,N-Diäthylcarbamoyl, Cyan, Acetyl, Propionyl, Butyryl, Methoxycarbonyl, Aethoxycarbonyl, Propyloxycarbonyl, Sulfamoyl, N-Methyl-, N-Aethyl-, N,N-Dimethyl- und N,N-Diäthylsulfamoyl, Methylsulfonyl, Aethylsulfonyl und Propylsulfonyl. Der Rest R' ist beispielsweise Methyl, Aethyl, Propyl, Isopropyl, Butyl, Isobutyl, sec-Butyl, tert-Butyl, Pentyl oder Hexyl, oder vorzugsweise Wasserstoff. Die Polymethylenreste alk' sind vorzugsweise Aethylen, Propylen oder Butylen. Die Indizes m, p und q sind unabhängig voneinander und vorzugsweise 2, 3 oder 4.

Falls T ein Rest $-SO_2-Z$ und V Wasserstoff ist, hat der Rest der Formel (5a) vorzugsweise die Form

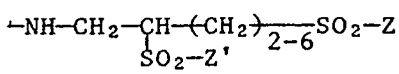 (5f),

worin Z und Z' unabhängig voneinander β-Sulfatoäthyl, β-Thiosulfatoäthyl, β-Phosphatoäthyl, β-Acyloxyäthyl, β-Halogenäthyl oder Vinyl ist. Eine wichtige Formelvariante dieses Restes ist:

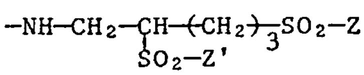 (5g),

worin Z = Z' ist, wobei Z bzw. Z' die oben angegebene Bedeutung hat; insbesondere ist Z bzw. Z' β-Sulfatoäthyl, β-Chloräthyl oder Vinyl.

Bevorzugte Ausführungsformen sind die Reaktivfarbstoffe der folgenden Formeln:

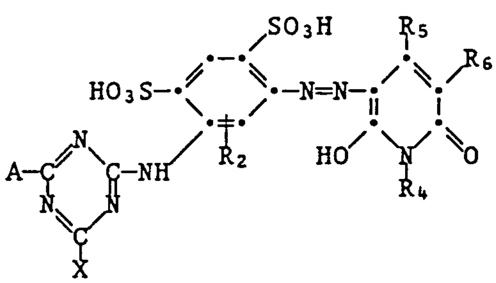 (15)

worin $R_2$, $R_4$, $R_5$, $R_6$, X und A die unter Formel (1) angegebenen Bedeutungen haben.

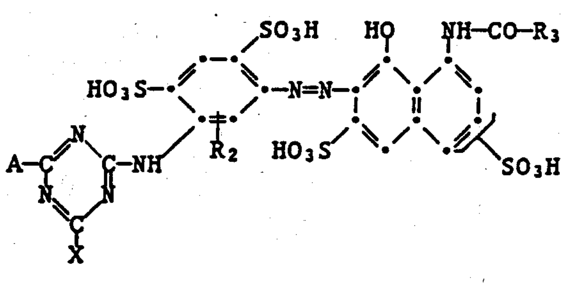 (16)

worin $R_2$, $R_3$, X und A die unter Formel (1) angegebenen Bedeutungen haben.

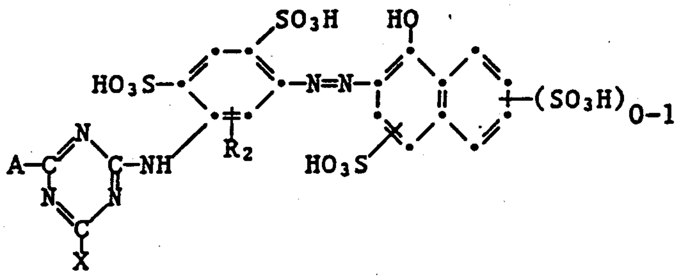 (17)

worin $R_2$, X und A die unter Formel (1) angegebenen Bedeutungen haben.

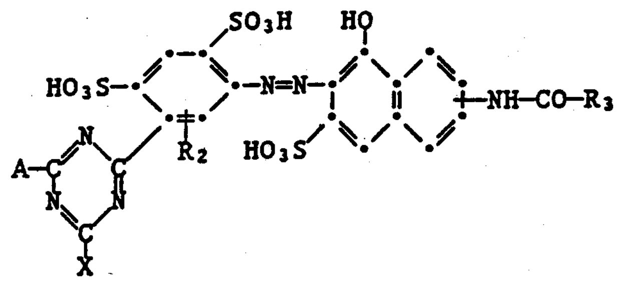 (18)

worin $R_2$, $R_3$, X und A die unter Formel (1) angegebenen Bedeutungen haben.

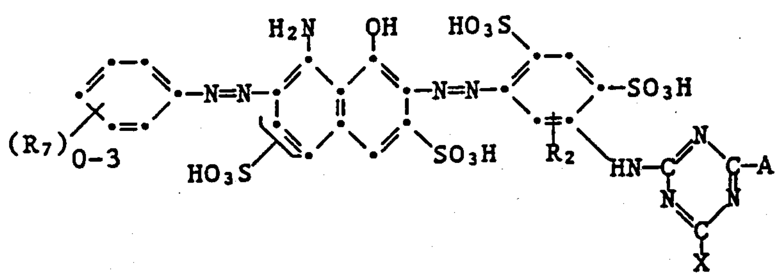 (19)

worin $R_2$, $R_7$, X und A die unter Formel (1) angegebenen Bedeutungen haben.

Reaktivfarbstoffe der Formel (19), worin der Index von $R_7$ = 1 ist und $R_7$ ein Rest $-SO_2-Z$ ist, worin Z die unter Formel (1) angegebene Bedeutung hat.

Der Rest R bzw. A ist vorzugsweise ein Rest der Formel

$-NHCH_2CH_2SO_2CH_2CH_2OSO_3H$ (6a),
$-NHCH_2CH_2SO_2CH_2CH_2Cl$ (6b),
$-NHCH_2CH_2SO_2CH=CH_2$ (6c),
$-NHCH_2CH_2CH_2SO_2CH=CH_2$ (6d),
$-NHCH_2CH_2OCH_2CH_2SO_2CH_2CH_2Cl$ (6e),
$-NHCH_2CH_2OCH_2CH_2SO_2CH=CH_2$ (6f),

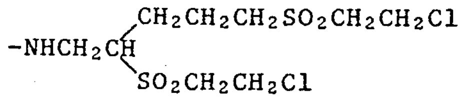 (6g),

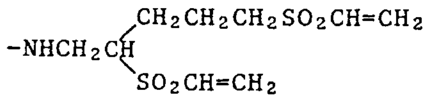 (6h),

oder 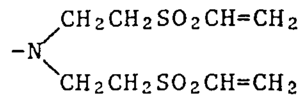 (6i).

Die wichtigsten Monoazo- und Disazochromophore gemäss Formel (1) sind in den Ausführungsbeispielen dargestellt.

Man erhält die Reaktivfarbstoffe der Formel (1), indem man einen entsprechenden Aminoazo- oder Aminodisazo-Farbstoff oder ein Farbstoffvorprodukt, ein s-Triazin der Formel

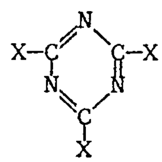 (7)

und ein Amin der Formel

H-A (8)

in beliebiger Folge miteinander umsetzt, wobei X und A die unter Formel (1) angegebenen Bedeutungen haben, oder, im Falle der Verwendung von Farbstoffvorprodukten, die erhaltenen Zwischenprodukte in die gewünschten Monohalogentriazinfarbstoffe überführt und gegebenenfalls eine weitere Umwandlungsreaktion anschliesst.

Gegebenenfalls wird an das erfindungsgemässe Verfahren eine weitere Umwandlungsreaktion angeschlossen. Bei der Herstellung der Endfarbstoffe aus Vorprodukten handelt es sich vor allem um Kupplungen, die zu Azofarbstoffen führen.

Da die einzelnen oben angegebenen Verfahrensschritte in unterschiedlicher Reihenfolge ausgeführt werden können, sind verschiedene Verfahrensvarianten möglich. Im allgemeinen führt man die Umsetzung schrittweise nacheinander aus, wobei die Reihenfolge der einfachen Reaktionen zwischen den einzelnen Reaktionskomponenten vorteilhafterweise sich nach den besonderen Bedingungen richtet.

Eine bevorzugte Verfahrensvariante ist dadurch gekennzeichnet, dass man einen Aminoazo- oder Aminodisazo-Farbstoff mit einem s-Triazin der Formel (7) kondensiert, und die erhaltene Triazinverbindung anschliessend mit einem Amin der Formel (8) kondensiert.

Eine weitere bevorzugte Verfahrensvariante besteht darin, dass man eine Komponente eines Aminoazo- oder Aminodisazo-Farbstoffes, die einen Rest der Formel

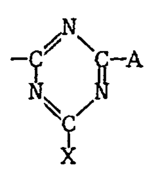 (9)

enthält, mit einer zur Herstellung des Farbstoffes benötigten zweiten Komponente umsetzt.

Dabei hängt es von der Struktur der Ausgangsstoffe ab, welche der möglichen Verfahrensvarianten die besten Resultate ergeben, oder unter welchen speziellen Bedingungen, z.B. bei welcher Kondensationstemperatur, die Reaktion am vorteilhaftesten auszuführen ist.

Da unter bestimmten Voraussetzungen Hydrolyse eines Halogentriazinrestes eintritt, muss ein Zwischenprodukt, welches Acetylaminogruppen enthält, zwecks Abspaltung der Acetylgruppen verseift werden, bevor mit einem Halogentriazin kondensiert wird. Welche Reaktion z.B. bei der Herstellung eines sekundären Kondensationsproduktes aus einer Verbindung der Formel (8) dem Triazin der Formel (7) und dem organischen Farbstoff oder einem Vorprodukt zweckmässigerweise zuerst ausgeführt wird, die des Triazins mit der Verbindung der Formel (8) oder mit dem organischen Farbstoff oder einem Vorprodukt des Farbstoffs, ist von Fall zu Fall verschieden und richtet sich vor allem nach der Löslichkeit der beteiligten Aminoverbindungen und der Basizität der zu acylierenden Aminogruppen.

Eine abgewandelte Ausführungsform des Verfahrens besteht darin, zunächst einen Farbstoff herzustellen, der eine Vorstufe des Reaktivrestes enthält, und diese nachträglich in die Endstufe umzuwandeln, z.B. durch Veresterung oder eine Additionsreaktion. Beispielsweise kann man einen Farbstoff, worin Z ein Rest $HO-CH_2CH_2$-ist, herstellen und das Zwischenprodukt vor oder nach der Acylierung mit Schwefelsäure umsetzen, so dass die Hydroxygruppe in die Sulfatogruppe übergeführt wird; oder man verwendet einen analogen Farbstoff, worin Z die Gruppe $H_2C=CH$- ist, und lagert an das Zwischenprodukt Thioschwefelsäure an, wobei ein Rest $HO_3SS-CH_2CH_2$-entsteht. Die Sulfatierung der Hydroxygruppe in einem Farbstoff der Formel (1) oder einem geeigneten Vorprodukt, erfolgt z.B. durch Umsetzung mit konzentrierter Schwefelsäure bei 0 °C bis mässig erhöhter Temperatur. Die Sulfatierung kann auch durch Reaktion der Hydroxyverbindung mit zwei Aequivalenten Chlorsulfonsäure pro Hydroxygruppe in einem polaren organischen Lösungsmittel, wie beispielsweise N-Methylpyrrolidon, bei 10 bis 80 °C erfolgen. Vorzugsweise erfolgt die Sulfatierung durch Eintragen der betreffenden Verbindung in Schwefelsäuremonohydrat bei Temperaturen zwischen 5 und 15 °C. Die Einführung eines anderen Restes für Z in eine Verbindung der Formel (1) oder ein Zwischenprodukt anstelle eines Halogenatoms oder der Sulfatogruppe, beispielsweise einer Thiosulfato- oder Phosphatogruppe, erfolgt in an sich bekannter Weise. Der Weg der Herstellung über eine Zwischenstufe des Reaktivrestes geht in vielen Fällen einheitlich und vollständig.

Ausserdem können Eliminierungsreaktionen an die Synthese angeschlossen werden. Beispielsweise kann man Reaktivfarbstoffe der Formel (1), welche Sulfatoäthylsulfonylreste enthalten, mit halogenwasserstoffab-spaltenden Mitteln, wie Natriumhydroxid, behandeln, wobei die Sulfatoäthylsulfonylreste in Vinylsulfonylreste übergehen.

Falls man von Farbstoffvorprodukten ausgeht, gelangt man zu den Reaktivfarbstoffen der Formel (1), indem man eine Komponente des Farbstoffes, die eine Gruppe $-N(R_1)H$ bzw. $-NH_2$ enthält, und ein Triazin der Formel (7) kondensiert, vorher oder nachher mit einer Verbindung der Formel (8) kondensiert, und mit der anderen Komponente des Farbstoffes umsetzt.

Die wichtigsten Verfahrensvarianten sind in den Ausführungsbeispielen dargestellt.

Im folgenden sollen mögliche Ausgangsstoffe, die zur Herstellung der Reaktivfarbstoffe der Formel (1) verwendet werden können, einzeln genannt werden.

Diazokomponenten:

1,3-Diaminobenzol-4,6-disulfonsäure,

Wenn als Diazokomponente statt eines Diamins eine Amino-acetylaminoverbindung eingesetzt werden soll, aus welcher nachträglich die Acetylgruppe durch Verseifen wieder abgespalten wird, wie dies oben in den Erläuterungen der Verfahrensvarianten beschrieben ist, kommen die Monoacetylverbindungen der oben genannten Diazokomponenten in Frage.

Kupplungskomponenten

1-Hydroxynaphthalin-4-sulfonsäure, 1-Hydroxynaphthalin-4,6- und -4,7-disulfonsäure, 1-Hydroxy-8-acetylaminonaphthalin-3-sulfonsäure, 2-Acetylamino-5-hydroxynaphthalin-7-sulfonsäure, 2-Acetylamino-8-hydroxynaphthalin-6-sulfonsäure, 1-Acetylamino-8-hydroxynaphthalin-3,6- und -4,6-disulfonsäure, 2-Benzoylamino-5-hydroxynaphthalin-7-sulfonsäure, 1-Benzoylamino-8-hydroxynaphthalin-3,6- und -4,6-disulfonsäure, 1-(3'-Nitrobenzoylamino)-8-hydroxynaphthalin-3,6- und -4,6-disulfonsäure, 1-(4'-Nitrobenzoylamino)-8-hydroxynaphthalin-3,6- und -4,6-disulfonsäure, 3-Amino-carbonyl-4-methyl-6-hydroxypyridon-(2), 1-Aethyl-3-cyan- oder -3-chlor-4-methyl-6-hydroxypyridon-(2), 1-Aethyl-3-sulfomethyl-4-methyl-6-hydroxypyridon-(2), 1-Aethyl-3-carbamoyl-4-methyl-6-hydroxypyridon-(2), 1-Aethyl-3-sulfomethyl-4-methyl-5-carbamoyl-6-hydroxypyridon-(2),1-β-Aminoäthyl-3-cyan-4-methyl-6-hydroxypyridon-(2), 1-γ-Aminopropyl-3-sulfomethyl-4-methyl-6-hydroxypyridon-(2), 1-Amino-8-hydroxy-2-(phenylazo)-naphthalin-3,6-disulfonsäure, 1-Amino-8-hydroxy-2-(4'-sulfophenylazo)-naphthalin-3,6-disulfonsäure, 1-Amino-8-hydroxy-2-(2',5'-disulfophenylazo)-naphthalin-3,6-disulfonsäure, 1-Amino-8-hydroxy-2-(3'-β-sulfatoäthylsulfonylphenylazo)-naphthalin-3,6-und -4,6-disulfonsäure, 1-Amino-8-hydroxy-2-(4'-β-sulfatoäthylsulfonylphenylazo)-naphthalin-3,6-disulfonsäure.

Triazine der Formel (7)

2,4,6-Trifluor-s-triazin (Cyanurfluorid), 2,4,6-Trichlor-s-triazin (Cyanurchlorid), 2,4,6-Tribrom-s-triazin (Cyanurbromid), 2,4,6-Trisulfo-s-triazin, 2,4,6-Tris-methylsulfonyl-s-triazin, 2,4,6-Trisphenylsulfonyl-s-triazin.

Amine der Formel (8)

Amine, worin A einen Rest der Formel (4) darstellt, können hergestellt werden, indem man entsprechende Nitrobenzolcarbonsäurechloride, Nitrophenylalkansäurechloride oder Nitrophenoxyalkansäurechloride mit Aminen der Formel

H-R (10),

welche den Resten der Formeln (5a) bis (5d) entsprechen, kondensiert, und die Nitrogruppen zu Aminogruppen reduziert.

Die Umsetzung wird vorzugsweise in einem hochsiedenden organischen Lösungsmittel, z.B. Nitrobenzol, durchgeführt. Die Reduktion der Nitrogruppe zur Aminogruppe erfolgt in an sich bekannter Weise durch katalytische Hydrierung mit Pd/Kohlenstoff in Aethanol, Essigester oder Tetrahydrofuran bei Raumtemperatur bis etwa 40° C. Die Reduktion kann auch mit Fe/Salzsäure oder Fe/Essigsäure in wässriger Lösung durchgeführt werden.

Nach einer anderen, in der DE-OS 20 40 620 beschriebenen Methode kann man das Säurechlorid mit einem ungesättigten aliphatischen Amin umsetzen, und an die Doppelbindung des Säureamids 2-Mercaptoäthanol bei Temperaturen zwischen 50° C und 180° C mit Hilfe katalytischer Mengen eines Radikalbildners oder von Schwefel anlagern. Die dadurch erhaltenen Hydroxyäthylthioäther-Verbindungen können auch hergestellt werden, indem man das Säurechlorid mit einem Halogenalkylamin kondensiert, und das Kondensationsprodukt mit 2-Mercaptoäthanol und Natriumalkoholat in Alkohol erwärmt. Die Thioätherverbindungen werden dann noch zu den entsprechenden Sulfonen oxydiert.

Die Oxydation der Thioätherverbindungen zu den Sulfonen kann nach verschiedenen Methoden erfolgen, beispielsweise mit Wasserstoffperoxid mit oder ohne Zusatz von Wolfram- oder Vanadinverbindungen als Katalysatoren, ferner mit Peressigsäure, Kaliumpermanganat, Kaliumpersulfat oder Chromsäure, oder mit Chlor/Salzsäure je in wässrigem, wässrig-organischem oder organischem Medium.

Die so erhältlichen Carbonsäureamide, in denen die Gruppierung $-SO_2-Z$ eine β-Hydroxyäthylsulfonylgruppe darstellt, können durch Behandeln mit Sulfatierungsmitteln, Phosphorylierungsmitteln, Halogenierungsmitteln, Alkyl- oder Arylsulfonsäurehalogeniden, Alkyl- oder Arylcarbonsäurehalogeniden oder Alkyl- oder Arylcarbonsäureanhydriden in die entsprechenden Farbstoffvorprodukte übergeführt werden, in denen die Gruppierung $-SO_2-Z$ z.B. die Gruppierung $-SO_2-CH_2-CH_2-O-SO_3H$, $-SO_2-CH_2-CH_2-O-PO_3H_2$, $-SO_2-CH_2-CH_2$-Halogen, $-SO_2-CH_2-CH_2-O-CO-CH_3$ oder $-SO_2-CH_2-CH_2-O-CO-C_6H_5$ bedeutet. Die so erhaltenen Produkte können ihrerseits durch Behandeln mit alkalisch wirkenden Mitteln, wie beispielsweise Alkalihydroxid oder Alkalicarbonat, wie Natriumhydroxyd oder Natriumcarbonat, in entsprechende Verbindungen übergeführt werden, in denen die Gruppierung $-SO_2-Z$ die Gruppierung $-SO_2-CH=CH_2$ bedeutet. Die so erhaltenen Produkte können wiederum durch Umsetzung (Addition) mit Salzen der Thioschwefelsäure, wie Natriumthiosulfat, in Verbindungen übergeführt werden, in denen die Gruppierung $-SO_2-Z$ die Gruppierung $-SO_2-CH_2-CH_2-S-SO_3H$ bedeutet.

Geeignete Sulfatierungsmittel sind hierbei beispielsweise konzentrierte Schwefelsäure sowie Chlorsulfonsäure und Amidosulfonsäure oder andere Schwefeltrioxid abgehende Verbindungen. Geeignete Phosphorylierungsmittel sind hierbei beispielsweise konzentrierte Phosphorsäure, Pyro-, Meta- oder Polyphosphorsäure, Polyphosphorsäurealkylester, Phosphoroxichlorid oder Gemische aus Phosphorsäure und Phosphor-(V)-oxid. Als Halogenierungsmittel können beispielsweise Thionylchlorid oder Thionylbromid verwendet werden.

Bevorzugt sind Verbindungen der Formel

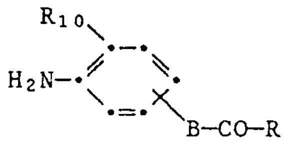 (11),

worin R einer der Reste der Formeln (5a) bis (5d), $R_{10}$ Wasserstoff, Methyl, Aethyl, Methoxy, Aethoxy oder Chlor ist, und B die direkte Bindung ist.

Das bevorzugte Verfahren zur Herstellung der Verbindung der Formel (11) besteht darin, dass man eine Verbindunge der Formel

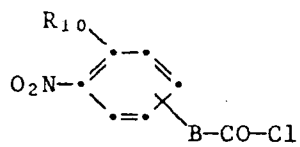 (12)

mit einem Amin der Formel

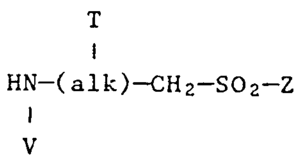 (13a),

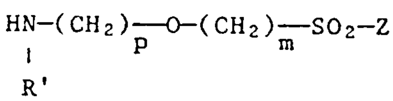 (13b),

$H_2N-(alk')-NH-(alk')-SO_2-Z$ (13c)

oder 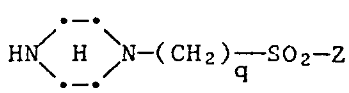 (13d)

kondensiert, und die Nitrogruppe zur Aminogruppe reduziert.

Nach einer Abänderung dieses Verfahrens können Verbindungen der Formel (11) auch in der Weise hergestellt werden, dass man eine Verbindung der Formel (12) mit einem Amin der Formel

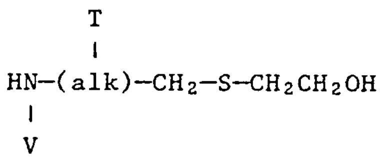 (14a),

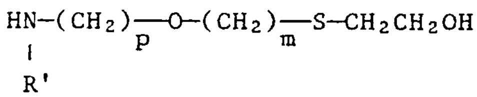 (14b),

$H_2N-(alk')-NH-(alk')-S-CH_2CH_2OH$ (14c)

oder 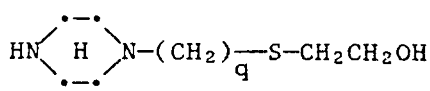 (14d)

kondensiert, das Kondensationsprodukt mit elementarem Chlor zu der entsprechenden β-Chloräthylsulfonyl-Verbindung oxydiert, und die Nitrogruppen zu Aminogruppen reduziert.

Ferner ist noch eine andere Verfahrensvariante anwendbar, wonach man zuerst eine Verbindung der Formel (12) mit einem der Amine der Formeln (14a) bis (14d) kondensiert, das erhaltene Produkt mit einem Peroxid zum Sulfon oxydiert, dann die Nitrogruppe zur Aminogruppe reduziert, die erhaltene Aminoverbindung mit einem s-Triazin der Formel (7) kondensiert, und zuletzt die Hydroxygruppe in dem Rest von einem der Amine der Formeln (14a) bis (14d) sulfatiert.

Die Kondensation der Verbindung der Formel (12) mit den Aminen der Formeln (14a) bis (14d) wird z.B. in Chloroform bei Raumtemperatur und in Gegenwart von alkalischen, säurebindenden Mitteln, z.B. Alkalihydroxiden, -carbonaten oder -bicarbonaten, durchgeführt. Anschliessend wird das Kondensationsprodukt in an sich bekannter Weise mit einer Chlor/Salzsäure-Mischungoxydiert. Die Reduktion der Nitrogruppe zur Aminogruppe erfolgt wie oben beschrieben.

Die als Ausgangsverbindungen verwendeten Amine der Formeln (13a) bis (14d) können analog dem Verfahren des Beispiels 1 der DE-OS 26 14 550 hergestellt werden.

Amine der Formeln (13a) bis (14d)

β-(β'-Chloräthylsulfonyl)-äthylamin,
β-[β'-(β"-Chloräthylsulfonyl)-äthyloxy]-äthylamin,
γ-(β'-Chloräthylsulfonyl)-propylamin,
Bis-[β-(β'-chloräthylsulfonyl)-äthyl]-amin,
Bis-[γ-(β'-chloräthylsulfonyl)-propyl]-amin,
β-(Vinylsulfonyl)-äthylamin,
Bis-[β-(vinylsulfonvl)-äthyl]-amin,
δ-(β'-Chloräthylsulfonyl)-butylamin,
β-(β'-Sulfatoäthylsulfonyl)-äthylamin,
Bis-[β-(β'-sulfatoäthylsulfonyl)-äthyl]-amin,
N-(γ-Vinylsulfonyl-propyl)piperazin,
β-(β'-Vinylsulfonyl-äthylamino)-äthylamin,
N-(β-Vinylsulfonyl-äthyl)piperazin,
β-(β'-Vinylsulfonyl-äthyloxy)-äthylamin,
β-[β'-(β"-Chloräthylsulfonyl)-äthylamino]-äthylamin,
β-[β'-(β"-Sulfatoäthylsulfonyl)-α'-methyl-äthylamino]-äthylamin,
β-[β'-(β"-Sulfatoäthylsulfonyl)-α'-methyl-äthylamino]-β-methyläthylamin,
γ-[β'-(β"-Sulfatoäthylsulfonyl)-α'-methyl-äthylamino]-propylamin,
δ-[β'-(β"-Sulfatoäthylsulfonyl)-α'-methyl-äthylamino]-n-butylamin,
α-Carbonsäure-β-(β'-chloräthylsulfonyl)-äthylamin,
α-Carbonsäureäthylester-β-(β'-chloräthylsulfonyl)-äthylamin,
β-Hydroxy-γ-(β'-chloräthylsulfonyl)-propylamin,
β,γ-(Bis-β'-chloräthylsulfonyl)-propylamin,
β-Acetoxy-γ-(β'-acetoxyäthylsulfonyl)-propylamin,

β-Chlor-γ-(β'-chloräthylsulfonyl)-propylamin,
β-Sulfato-γ-(β'-sulfatoäthylsulfonyl)-propylamin,
Bis-[β-5-hydroxy-γ-(β'-chloräthylsulfonyl)-propyl]-amin,
Bis-[β-chlor-γ-(β'-chloräthylsulfonyl)-propyl]-amin,
Bis-[β-sulfato-γ-(β'-sulfatoäthylsulfonyl)-propyl]-amin,
β-Hydroxy-γ-(β'-vinylsulfonyl)-propylamin,
4-(β-Chloräthylsulfonyl)-cyclohexylamin,
4-(β-Sulfatoäthylsulfonyl)-cyclohexylamin,
4-Vinylsulfonylpiperidin,
4-(β-Chloräthylsulfonyl)-piperidin,
2-[β-(β'-Chloräthylsulfonyl)äthyl]-piperidin,
2-(β-Sulfatoäthylsulfonyl)methylpiperidin,
N-[γ-(β'-Chloräthylsulfonyl)propyl]-piperazin,
γ-[γ'-(β"-Chloräthylsulfonyl)propyloxy]-propylamin,
β-[Bis-(β'-vinylsulfonyl-äthyl)amino]-äthylamin,
(β,ε-Bis-vinylsulfonyl)-n-pentylamin,
(β,ε-Bis-chloräthylsulfonyl)-n-pentylamin
sowie gegebenenfalls weitere Verbindungen, worin die β-Chloräthylsulfonyl-Gruppe durch β-Sulfatoäthylsulfonyl oder Vinylsulfonyl ersetzt ist, oder worin die β-Chloräthylsulfonyl-, β-Sulfatoäthylsulfonyl- oder Vinylsulfonyl-Gruppe durch β-Hydroxyäthyl ersetzt ist.

Amine der Formel (10), worin R ein Rest der Formel (5f) bzw. (5g) ist, können nach der folgenden Arbeitsvorschrift hergestellt werden.

A: Synthese von 2,5-Dichloraminopentan-hydrochlorid aus Tetrahydrofurfurylamin-hydrochlorid

137,5 Teile Tetrahydrofurfurylaminhydrochlorid werden mit 1500 Teilen Salzsäure (chem. rein) bei Raumtemperatur versetzt. Anschliessend wird die Reaktionslösung in einer Druckapparatur auf 130 °C erwärmt. Dabei steigt der Druck bis auf 8 bar. Nach 24 Stunden Reaktionsdauer wird die Temperatur auf 25 °C abgekühlt. Die dunkelbraune Lösung wird mit Aktivkohle behandelt und klärfiltriert, und die Mutterlauge wird im Rotationsvacuum-Apparat eingeengt. Nach der Umkristallisation aus 1200 Teilen Aethanol erhält man 130 Teile eines analysenreinen Produktes, 2,5-Dichloraminopentan-hydrochlorid, mit folgender Formel

$$HCl \cdot H_2N-CH_2-\underset{\displaystyle Cl}{\underset{|}{C}}H-CH_2-CH_2-CH_2-Cl$$

| Analyse: Formel $C_5H_{12}Cl_3N$ (MG = 192,52) | |
|---|---|
| Berechnet | Gefunden |
| 31,20 % C | 30,8 % C |
| 6,29 % H | 6,4 % H |
| 7,28 % N | 6,9 % N |
| 55,25 % Cl | 54,85 % Cl |

B: Umsetzung von 2,5-Dichloraminopentanhydrochlorid mit 2 Mol 2-Mercapto-äthanol und anschliessende Chloroxydation zu 2,5-Bis-β-chloräthylsulfonylaminopentan-hydrochlorid

25,2 Teile Natriumhydroxidplätzchen werden in 250 Teilen Aethanol (94%ig) bei Raumtemperatur gelöst. Zu dieser Lösung gibt man 32 Teile 2-Mercapto-äthanol so zu, dass die Temperatur nicht über 35 °C steigt. Nun wird die Lösung auf 70 °C erwärmt, und bei dieser Temperatur werden innerhalb einer Stunde 38,5 Teile 2,5-Dichloraminopentanhydrochlorid gelöst in 240 Teilen Aethanol (94%ig) zugetropft. Anschliessend wird die Reaktionsmasse 3 Stunden unter Rückfluss verrührt. Nun wird Aktivkohle zugesetzt und auf Raumtemperatur abgekühlt. Das ausgefallene Salz wird nun durch Filtration entfernt und das Filtrat unter reduziertem Druck abdestilliert. Als Rückstand verbleibt ein Oel, das sich ab ca. 160 °C zersetzt. Die Verbindung hat die Formel

$H_2N-CH_2-CH-CH_2-CH_2-CH_2-S-CH_2-CH_2-OH$

$\qquad\qquad\quad S-CH_2-CH_2-OH$

| Analyse: Formel $C_9H_{21}NO_2S_2$ (MG = 239,40) | |
|---|---|
| Berechnet | Gefunden |
| 45,2 % C<br>8,8 % H<br>5,9 % H<br>26,7 % S | 45,0 % C<br>8,6 % H<br>5,9 % H<br>25,9 % S |

Der Rückstand wird in 200 Teilen Wasser gelöst und bei max. 33 ° C mit 70 Teilen Salzsäure (37%ig) versetzt. Dann werden unter Eiskühlung bei 15-20 ° C innerhalb einer Stunde 60 Teile Chlorgas über Niveau eingeleitet, bis keine Chloraufnahme mehr beobachtet wird. Nun wird unter Wasserstrahlvacuum die Salzsäure abdestilliert; Rohausbeute: 55 Teile. Nach der Umkristallisation aus Methanol und Aktivkohle erhält man das analysenreine Produkt 2,5-Bis-β-chloräthylsulfonylaminopentanhydrochlorid mit einem Schmelzpunkt von 99 ° -101 ° C und folgender Formel

$\qquad\qquad\qquad\qquad CH_2-CH_2-CH_2-SO_2CH_2CH_2Cl$

$HCl \cdot H_2N-CH_2-CH$

$\qquad\qquad\qquad\qquad SO_2CH_2CH_2Cl$

| Analyse: Formel $C_9H_{19}Cl_2NO_4S_2 \cdot HCl$ (MG = 376,74) | |
|---|---|
| Berechnet | Gefunden |
| 28,69 % c<br>5,35 % H<br>3,72 % H<br>17,02 % S<br>28,23 % Cl | 28,5 % C<br>5,8 % H<br>3,7 % H<br>16,7 % S<br>27,95 % Cl |

Das 20,1 MHz-$^{13}$C-Spektrum in DMSO sieht wie folgt aus:

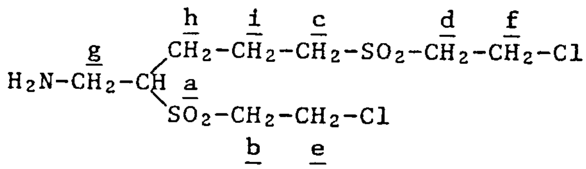

| | |
|---|---|
| a | 58,7278 ppm |
| b, c, d | 53,7526 ppm<br>52,2616 ppm<br>52,2141 ppm |
| e, f | 36,3773 ppm<br>35,9702 ppm |
| g | 36,0882 ppm |
| h | 23,7356 ppm |
| i | 18,3801 ppm |

Entsprechende Amine H-R sind beispielsweise:
2,5-Bis-β-chloräthylsulfonylpentylamin,
2,5-Bis-β-sulfatoäthylsulfonylpentylamin,
2,5-Bis-vinylsulfonylpentylamin,
2,4-Bis-β-chloräthylsulfonylbutylamin und
2,3-Bis-β-chloräthylsulfonylpropylamin.

Die Kondensation des s-Triazins der Formel (7), insbesondere eines 2,4,6-Trihalogen-s-triazins mit den organischen Farbstoffen bzw. den eine Gruppe $-N(R_1)H$ bzw. $-NH_2$ enthaltenden Diazokomponenten erfolgt vorzugsweise in wässriger Lösung oder Suspension, bei niedrigen Temperaturen, vorzugsweise zwischen 0° und 5°C und bei schwach saurem, neutralem bis schwach alkalischem pH-Wert. Vorteilhaft wird der bei der Kondensation freiwerdende Halogenwasserstoff laufend durch Zugabe wässriger Alkalihydroxide, -carbonate oder -bicarbonate neutralisiert. Für die weitere Umsetzung der so erhaltenen Halogentriazinfarbstoffe bzw. für die Umsetzung des 2,4,6-Trihalogen-s-triazins mit den Verbindungen der Formel (8) setzt man die freien Amine oder deren Salze, bevorzugt in Form des Hydrochlorids, ein. Die Umsetzung wird bei Temperaturen etwa zwischen 0 und 40°, bevorzugt zwischen 5 und 25°C, unter Zusatz säurebindender Mittel, bevorzugt Natriumcarbonat, in einem pH-Bereich von 2 bis 8 bevorzugt 5 bis 6,5, durchgeführt.

Die Kondensation des Halogentriazins mit einer Verbindung der Formel (8) kann vor oder nach der Kondensation des Halogentriazins mit einem Farbstoff geschehen. Die Kondensation des Halogentriazins mit einer Verbindung der Formel (8) erfolgt vorzugsweise in wässriger Lösung oder Suspension, bei niedriger Temperatur und bei schwach saurem bis neutralem pH-Wert. Auch hier wird der bei der Kondensation freiwerdende Halogenwasserstoff vorteilhafterweise durch laufende Zugabe von wässrigen Alkalihydroxiden, -carbonaten oder -bicarbonaten neutralisiert.

Die Diazotierung der Diazokomponenten erfolgt in der Regel durch Einwirkung salpetriger Säure in wässrig-mineralsaurer Lösung bei tiefer Temperatur. Die Kupplung auf die Kupplungskomponente erfolgt bei stark sauren, neutralen bis schwach alkalischen pH-Werten.

Der in den Farbstoffen der Formel (1) enthaltene Rest der Formel

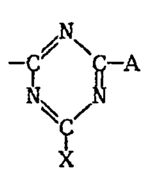

(9)

ist eine reaktive Gruppierung, worin X eine faserreaktive Abgangsgruppe darstellt. Ausserdem weist der Rest R einen Reaktivrest auf und zwar die Gruppe $-SO_2-Z$; dieser Reaktivrest enthält eine Abgangsgruppe,

z.B. wenn Z β-Chloräthyl ist, oder kann nach Art von faserreaktiven Gruppen wirksam werden, z.B. wenn Z Vinyl ist (Grundlegendes über Reaktivfarbstoffe siehe Venkataraman, K.: The Chemistry of Synthetic Dyes. New York: Academic Press 1972; Vol VI, Reactive Dyes).

Die Reaktivfarbstoffe der Formel (1) eignen sich zum Färben und Bedrucken der verschiedensten Materialien, wie Seide, Leder, Wolle, Polyamidfasern und Polyurethanen, und insbesondere cellulosehaltiger Fasermaterialien aller Art. Solche Fasermaterialien sind beispielsweise die natürlichen Cellulosefasern, wie Baumwolle, Leinen und Hanf, sowie Zellstoff und regenerierte Cellulose, z.B. Viskose, ferner Modalfasern und deren Mischungen mit Baumwolle. Die Reaktivfarbstoffe der Formel (1) sind auch zum Färben oder Bedrucken von hydroxylgruppenhaltigen Fasern geeignet, die in Mischgeweben enthalten sind, z.B. von Gemischen aus Baumwolle mit Polyamidfasern, oder insbesondere Polyesterfasern.

Die Reaktivfarbstoffe der Formel (1) können auch in Mischungen untereinander oder in Mischungen mit anderen Reaktivfarbstoffen oder nicht-reaktiven Farbstoffen, z.B. Säurefarbstoffen oder Dispersionsfarbstoffen, zum Färben oder Bedrucken der genannten Fasermaterialien verwendet werden.

Die erfindungsgemässen Farbstoffe lassen sich auf verschiedene Weise auf das Fasermaterial applizieren und auf der Faser fixieren, insbesondere in Form von wässrigen Farbstofflösungen und -druckpasten. Sie eignen sich sowohl für das Ausziehverfahren als auch zum Färben nach dem Foulard-Färbeverfahren, wonach die Ware mit wässrigen, gegebenenfalls salzhaltigen Farbstofflösungen imprägniert wird, und die Farbstoffe nach einer Alkalibehandlung oder in Gegenwart von Alkali, gegebenenfalls unter Wärmeeinwirkung fixiert werden. Nach dem Fixieren werden die Färbungen oder Drucke mit kaltem und heissem Wasser, gegebenenfalls unter Zusatz eines dispergierend wirkenden und die Diffusion der nicht fixierten Anteile fördernden Mittels gründlich gespült.

Die Reaktivfarbstoffe der Formel (1) zeichnen sich durch hohe Reaktivität, gutes Fixiervermögen und ein sehr gutes Aufbauvermögen aus. Sie können daher nach dem Ausziehfärbeverfahren bei niedrigen Färbetemperaturen eingesetzt werden und erfordern beim Pad-Steam-Verfahren nur kurze Dämpfzeiten. Die Fixiergrade sind hoch und die nicht fixierten Anteile können leicht ausgewaschen werden, wobei die Differenz zwischen Ausziehgrad und Fixiergrad bemerkenswert klein, d.h. der Seifverlust sehr gering ist. Die Reaktivfarbstoffe der Formel (1) eignen sich auch besonders zum Druck, vor allem auf Baumwolle, ebenso aber auch zum Bedrucken von stickstoffhaltigen Fasern, z.B. von Wolle oder Seide oder von Mischgeweben, die Wolle oder Seide enthalten.

Die mit den erfindungsgemässen Farbstoffen hergestellten Färbungen und Drucke auf Cellulosefasermaterialien besitzen eine hohe Farbstärke und eine hohe Faser-Farbstoff-Bindungsstabilität, sowohl in saurem als auch in alkalischem Bereich, weiterhin eine gute Lichtechtheit und sehr gute Nassechtheitseigenschaften, wie Wasch-, Wasser-, Seewasser-, Ueberfärbe- und Schweissechtheiten, sowie eine gute Plissierechtheit, Bügelechtheit und Reibechtheit.

Die nachfolgenden Beispiele dienen zur Erläuterung der Erfindung. Die Temperaturen sind in Celsiusgraden angegeben, Teile sind Gewichtsteile, die Prozentangaben beziehen sich auf Gewichtsprozente, sofern nicht anders vermerkt. Gewichtsteile stehen zu Volumenteilen im Verhältnis von Kilogramm zu Liter.

Die Herstellung der Monoazo- oder Disazozwischenverbindungen ist in den nachfolgenden Ausführungsbeispielen nicht in allen Fällen beschrieben, sie ergibt sich jedoch ohne weiteres aus der allgemeinen Beschreibung.

Beispiel 1:

26,8 Teile 1,3-Phenylendiamin-4,6-disulfonsäure werden in 250 Teilen Wasser bei Raumtemperatur und einem pH-Wert von 4,0 gelöst. Diese Lösung wird im Laufe einer Stunde zu einer Suspension von 19 Teilen Cyanurchlorid in 100 Teilen einer Eis/Wasser-Mischung so zugetropft, dass eine Temperatur von 0 bis 3° C und der pH-Wert von 4,0 gehalten wird. Anschliessend lässt man die Reaktionsmischung während einer Stunde reagieren. Danach wird eine Lösung aus 37 Teilen des Amins der Formel

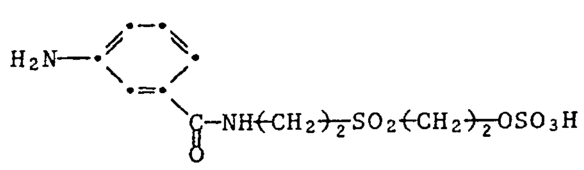

in 150 Teilen Wasser so zugegeben, dass eine Temperatur von 0 bis 5° C und der pH-Wert bei 4 bis 5 gehalten wird. Nun lässt man mit steigender Temperatur bis 20° C und gleichzeitigem Anstieg des pH-Wertes bis 6,0 die Reaktionsmischung zu Ende reagieren. Nach etwa einer Stunde erhält man als Zwischenprodukt die Verbindung der Formel

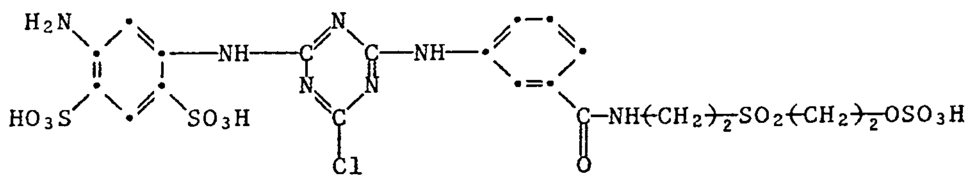

welche in der Reaktionslösung nach dem üblichen Verfahren diazotiert und mit 19 Teilen 1-Aethyl-3-aminocarbonyl-4-methyl-6-hydroxypyridon-(2) gelöst in 100 Teilen Wasser bei neutralem pH gekuppelt wird. Nach der Kupplung wird der Farbstoff der folgenden Konstitution isoliert:

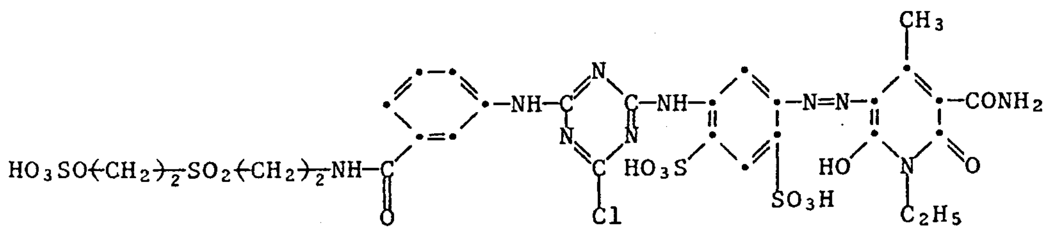

Er färbt Cellulosefasern in reinen, grünstichig gelben Tönen.

Beispiel 2:

26,8 Teile 1,3-Phenylendiamin-4,6-disulfonsaure werden in 250 Teilen Wasser bei Raumtemperatur und einem pH-Wert von 4,0 gelöst. Diese Lösung wird im Laufe einer Stunde zu einer Suspension von 19 Teilen Cyanurchlorid in 100 Teilen einer Eis/Wasser-Mischung so zugetropft, dass eine Temperatur von 0 bis 3° C und der pH-Wert von 4,0 gehalten wird. Anschliessend lässt man die Reaktionsmischung während einer Stunde reagieren. Danach wird eine Lösung aus 27 Teilen des Amins der Formel

$$HCl \cdot H_2N{\leftarrow}CH_2{\rightarrow_2}O{\leftarrow}CH_2{\rightarrow_2}SO_2{\leftarrow}CH_2{\rightarrow_2}Cl$$

in 150 Teilen Wasser so zugegeben, dass eine Temperatur von 0 bis 5° C und der pH-Wert bei 6 bis 7 gehalten wird. Nun lässt man mit steigender Temperatur bis 20° C und gleichzeitigem Anstieg des pH-Wertes bis 8,0 die Reaktionsmischung zu Ende reagieren. Nach etwa einer Stunde erhält man als Zwischenprodukt die Verbindung der Formel

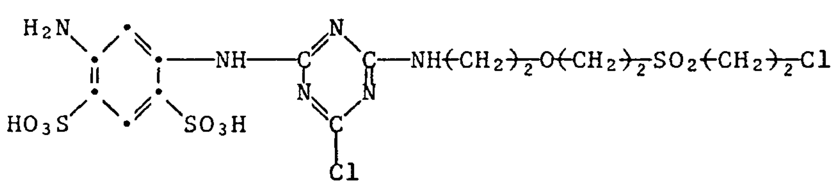

welche in der Reaktionslösung nach dem üblichen Verfahren diazotiert und mit 19 Teilen 1-Aethyl-3-aminocarbonyl-4-methyl-6-hydroxypyridon-(2) gelöst in 100 Teilen Wasser bei neutralem pH gekuppelt wird. Nach der Kupplung wird der Farbstoff der folgenden Konstitution isoliert:

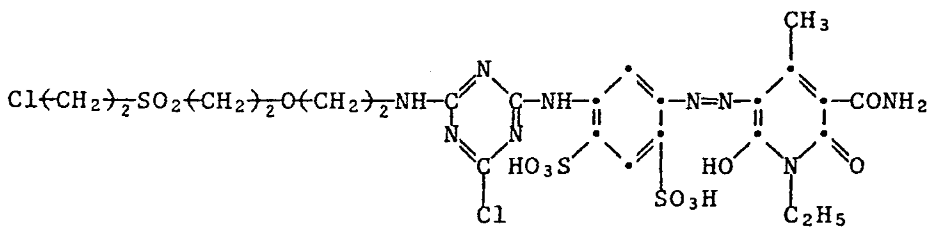

Er färbt Cellulosefasern in reinen, grünstichig gelben Tönen.

Beispiel 3:

26,8 Teile 1,3-Phenylendiamin-4,6-disulfonsäure werden in 250 Teilen Wasser bei Raumtemperatur und einem pH-Wert von 4,0 gelöst. Diese Lösung wird im Laufe einer Stunde zu einer Suspension von 19 Teilen Cyanurchlorid in 100 Teilen einer Eis/Wasser-Mischung so zugetropft, dass eine Temperatur von 0 bis 3 °C und der pH-Wert von 4,0 gehalten wird. Anschliessend lässt man die Reaktionsmischung während einer Stunde reagieren. Danach wird eine Lösung aus 40 Teilen des Amins der Formel

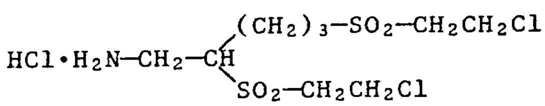

in 150 Teilen Wasser so zugegeben, dass eine Temperatur von 0 bis 5 °C und der pH-Wert bei 6,0 gehalten wird. Nun lässt man mit steigender Temperatur bis 20 °C und gleichzeitigem Anstieg des pH-Wertes bis 7,0 die Reaktionsmischung zu Ende reagieren. Nach etwa einer Stunde erhält man als Zwischenprodukt die Verbindung der Formel

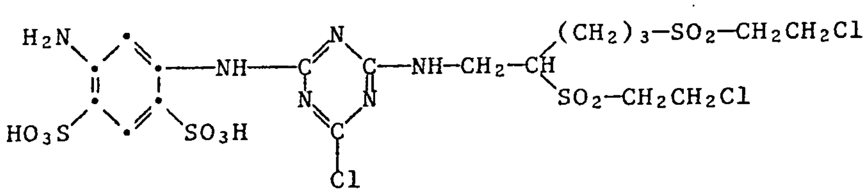

welche in der Reaktionslösung nach dem üblichen Verfahren diazotiert und mit 19 Teilen 1-Aethyl-3-aminocarbonyl-4-methyl-6-hydroxypyridon-(2) gelöst in 100 Teilen Wasser bei neutralem pH gekuppelt wird. Nach der Kupplung wird der Farbstoff der folgenden Konstitution isoliert:

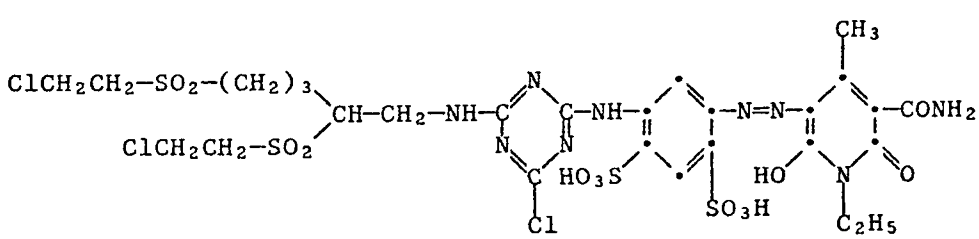

Er färbt Cellulosefasern in reinen, grünstichig gelben Tönen.

Beispiel 4:

26,8 Teile 1,3-Phenylendiamin-4,6-disulfonsäure werden in 250 Teilen Wasser bei Raumtemperatur und

einem pH-Wert von 4,0 gelöst. Zu dieser Lösung werden im Laufe von 10 Minuten 14 Teile Cyanurfluorid so zugetropft, dass eine Temperatur von 0 bis 3 ° C und der pH-Wert von 4,0 gehalten wird. Anschliessend lässt man die Reaktionsmischung eine Stunde lang reagieren. Danach wird eine Lösung aus 37 Teilen des Amins der Formel

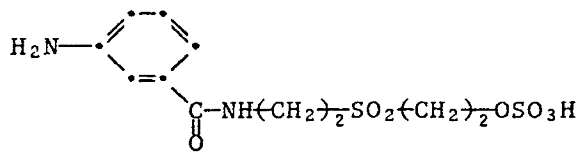

in 150 Teilen Wasser so zugegeben, dass eine Temperatur von 0 bis 5 ° C und der pH-Wert bei 4 bis 5 gehalten wird. Nun lässt man mit steigender Temperatur bis 20 ° C und gleichzeitigem Anstieg des pH-Wertes bis 6,0 die Reaktionsmischung zu Ende reagieren. Nach etwa einer Stunde erhält man als Zwischenprodukt die Verbindung der Formel

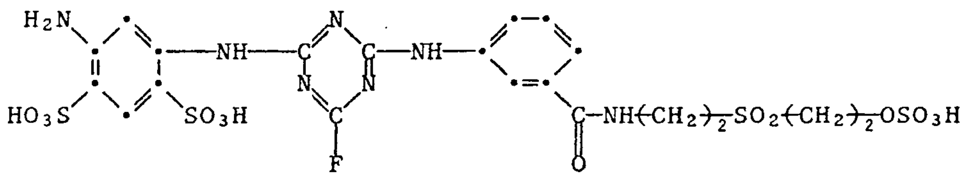

.

Diese wird in der Reaktionslösung nach dem üblichen Verfahren diazotiert und mit 19 Teilen 1-Aethyl-3-aminocarbonyl-4-methyl-6-hydroxypyridon-(2) gelöst in 100 Teilen Wasser bei neutralem pH gekuppelt. Nach der Kupplung wird der Farbstoff der folgenden Konstitution isoliert:

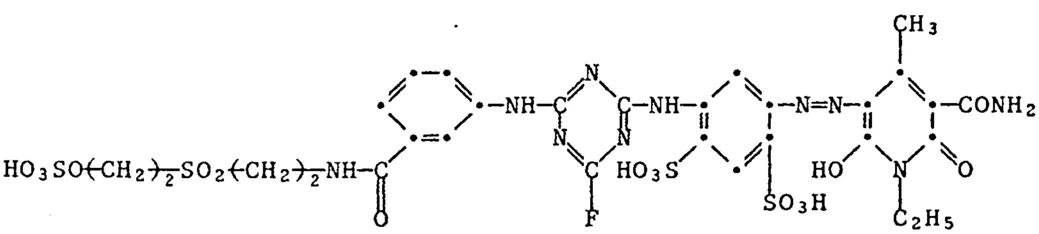

Der Farbstoff färbt Cellulosefasern in reinen, grünstichig gelben Tönen.

Beispiel 5:

26,8 Teile 1,3-Phenylendiamin-4,6-disulfonsaure werden in 350 Teilen Wasser bei Raumtemperatur und einem pH-Wert von 4,0 gelöst. Zu dieser Lösung werden im Laufe von 10 Minuten 14 Teile Cyanurfluorid so zugetropft, dass eine Temperatur von 0 bis 3 ° C und der pH-Wert von 4,0 gehalten wird. Anschliessend lässt man die Reaktionsmischung eine Stunde lang reagieren. Danach wird eine Lösung aus 27 Teilen des Amins der Formel

$$HCl \cdot H_2N(CH_2)_2O(CH_2)_2SO_2(CH_2)_2Cl$$

in 150 Teilen Wasser so zugegeben, dass eine Temperatur von 0 bis 5 ° C und der pH-Wert bei 6 bis 7 gehalten wird. Dann lässt man mit steigender Temperatur bis 20 ° C und gleichzeitigem Anstieg des pH-Wertes bis 8,0 die Reaktionsmischung zu Ende reagieren. Nach etwa einer Stunde erhält man als

Zwischenprodukt die Verbindung der Formel

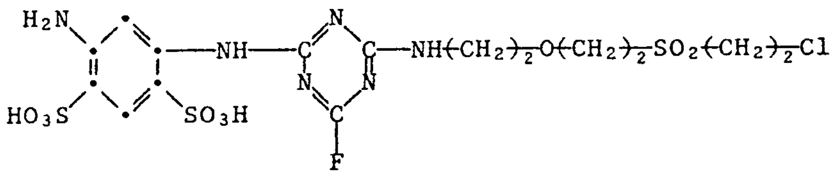

.

Diese wird in der Reaktionslösung nach dem üblichen Verfahren diazotiert und mit 19 Teilen 1-Aethyl-3-aminocarbonyl-4-methyl-6-hydroxypyridon-(2) gelöst in 100 Teilen Wasser bei neutralem pH gekuppelt. Nach der Kupplung wird der Farbstoff der folgenden Konstitution isoliert:

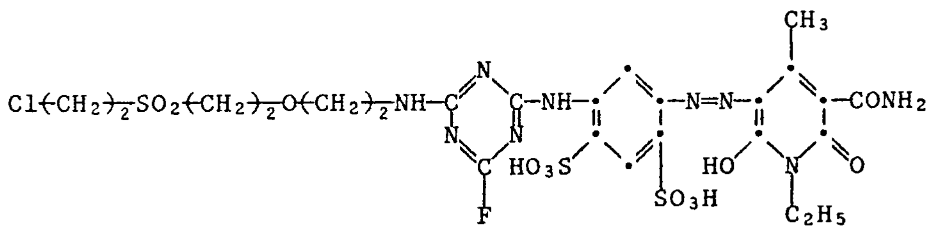

Der Farbstoff färbt Cellulosefasern in reinen, grünstichig gelben Tönen.

Beispiel 6:

26,8 Teile 1,3-Phenylendiamin-4,6-disulfonsäure werden in 250 Teilen Wasser bei Raumtemperatur und einem pH-Wert von 4,0 gelöst. Diese Lösung wird im Laufe einer Stunde zu einer Suspension von 19 Teilen Cyanurchlorid in 100 Teilen einer Eis/Wasser-Mischung so zugetropft, dass eine Temperatur von 0 bis 3 °C und der pH-Wert von 4,0 gehalten wird. Anschliessend lässt man die Reaktionsmischung während einer Stunde reagieren. Danach wird eine Lösung aus 37 Teilen des Amins der Formel

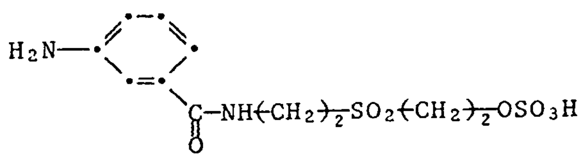

in 150 Teilen Wasser so zugegeben, dass eine Temperatur von 0 bis 5 °C und der pH-Wert bei 4 bis 5 gehalten wird. Nun lässt man mit steigender Temperatur bis 20 °C und gleichzeitigem Anstieg des pH-Wertes bis 6,0 die Reaktionsmischung zu Ende reagieren. Nach etwa einer Stunde erhält man als Zwischenprodukt die Verbindung der Formel

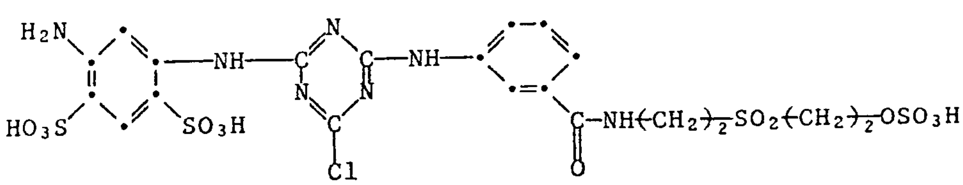

welche in der Reaktionslösung nach dem üblichen Verfahren diazotiert und mit 40 Teilen 1-Benzoylamino-8-hydroxynaphthalin-4,6-disulfonsäure gelöst in 300 Teilen Wasser bei neutralem pH gekuppelt wird. Nach der Kupplung wird der Farbstoff der folgenden Konstitution isoliert:

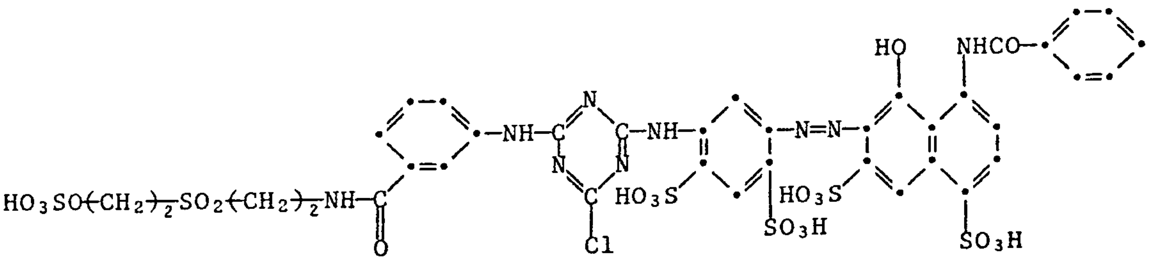

Er färbt Cellulosefasern in reinen, scharlachroten Tönen.

Beispiel 7:

26,8 Teile 1,3-Phenylendiamin-4,6-disulfonsäure werden in 350 Teilen Wasser bei 0 ° C und einem pH-Wert von 4,0 gelöst. Zu dieser Lösung werden im Laufe von 10 Minuten 14 Teile Cyanurfluorid so zugetropft, dass eine Temperatur von 0 bis 3 ° C und der pH-Wert von 4,0 gehalten wird. Anschliessend lässt man die Reaktionsmischung eine Stunde lang reagieren. Danach wird eine Lösung aus 40 Teilen des Amins der Formel

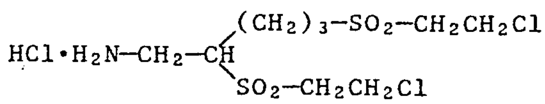

in 150 Teilen Wasser so zugegeben, dass eine Temperatur von 0 bis 5 ° C und der pH-Wert bei 6,0 gehalten wird. Dann lässt man mit steigender Temperatur bis 20 ° C und gleichzeitigem Anstieg des pH-Wertes bis 7,0 die Reaktionsmischung zu Ende reagieren. Nach etwa einer Stunde erhält man als Zwischenprodukt die Verbindung der Formel

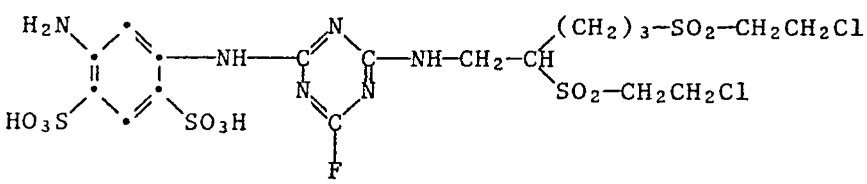

.

Diese wird in der Reaktionslösung nach dem üblichen Verfahren diazotiert und mit 40 Teilen 1-Benzoylamino-8-hydroxynaphthalin-3,6-disulfonsäure gelöst in 300 Teilen Wasser bei neutralem pH gekuppelt. Nach der Kupplung wird der Farbstoff der folgenden Konstitution isoliert:

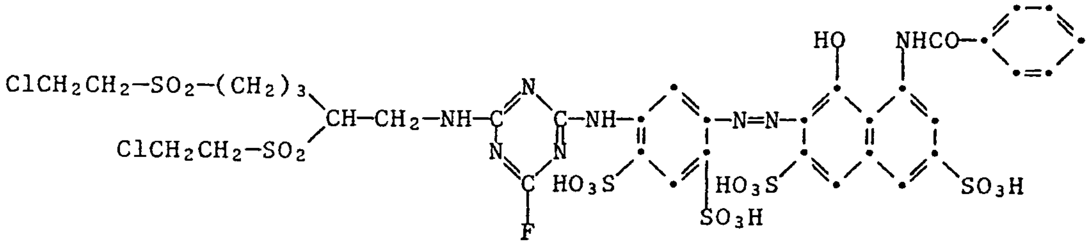

Er färbt Cellulosefasern in reinen, roten Tönen.

Beispiel 8:

26,8 Teile 1,3-Phenylendiamin-4,6-disulfonsäure werden in 250 Teilen Wasser bei Raumtemperatur und einem pH-Wert von 4,0 gelöst. Diese Lösung wird im Laufe einer Stunde zu einer Suspension von 19 Teilen Cyanurchlorid in 100 Teilen einer Eis/Wasser-Mischung so zugetropft, dass eine Temperatur von 0 bis 3° C und der pH-Wert von 4,0 gehalten wird. Anschliessend lässt man die Reaktionsmischung während einer Stunde reagieren. Danach wird eine Lösung aus 37 Teilen des Anins der Formel

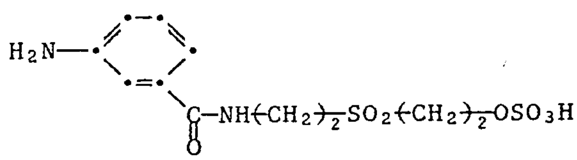

in 150 Teilen Wasser so zugegeben, dass eine Temperatur von 0 bis 5° C und der pH-Wert bei 4 bis 5 gehalten wird. Nun lässt man mit steigender Temperatur bis 20° C und gleichzeitigem Anstieg des pH-Wertes bis 6,0 die Reaktionsmischung zu Ende reagieren. Nach etwa einer Stunde erhält man als Zwischenprodukt die Verbindung der Formel

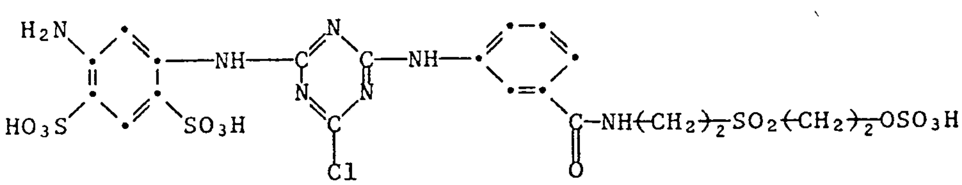

welche in der Reaktionslösung nach dem üblichen Verfahren diazotiert und mit 58 Teilen einer Kupplungskomponente der Formel

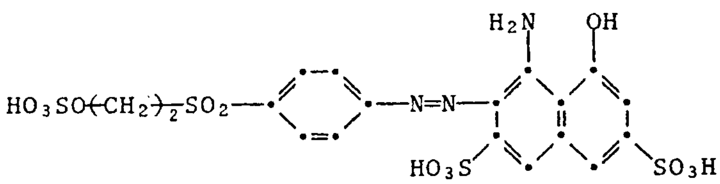

gelöst in 350 Teilen Wasser im neutralen bis schwach alkalischen Bereich gekuppelt wird.

Nach der Kupplung wird der erhaltene Farbstoff bei Raumtemperatur und pH = 10 eine Stunde lang vinyliert und dann neutral isoliert. Das Endprodukt hat die Formel

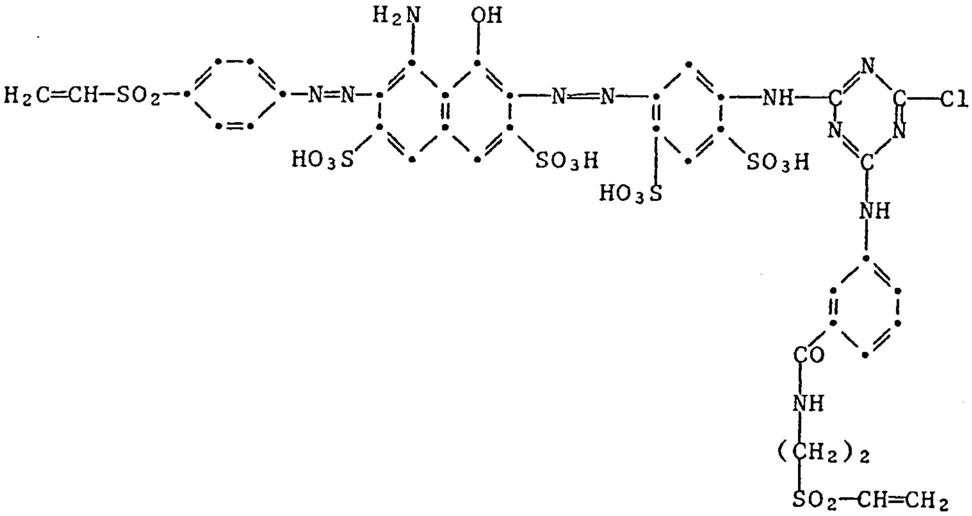

und färbt Cellulosefasern in marineblauen Tönen.

Beispiel 9:

26,8 Teile 1,3-Phenylendiamin-4,6-disulfonsäure werden in 250 Teilen Wasser bei Raumtemperatur und einem pH-Wert von 4,0 gelöst. Diese Lösung wird im Laufe einer Stunde zu einer Suspension von 19 Teilen Cyanurchlorid in 100 Teilen einer Eis/Wasser-Mischung so zugetropft, dass eine Temperatur von 0 bis 3° C und der pH-Wert von 4,0 gehalten wird. Anschliessend lässt man die Reaktionsmischung während einer Stunde reagieren. Danach wird eine Lösung aus 27 Teilen des Amins der Formel

$$HCl \cdot H_2N \leftarrow CH_2 \rightarrow_2 O \leftarrow CH_2 \rightarrow_2 SO_2 \leftarrow CH_2 \rightarrow_2 Cl$$

in 150 Teilen Wasser so zugegeben, dass eine Temperatur von 0 bis 5° C und der pH-Wert bei 6 bis 7 gehalten wird. Nun lässt man mit steigender Temperatur bis 20° C und gleichzeitigem Anstieg des pH-Wertes bis 8,0 die Reaktionsmischung zu Ende reagieren. Nach etwa einer Stunde erhält man als Zwischenprodukt die Verbindung der Formel

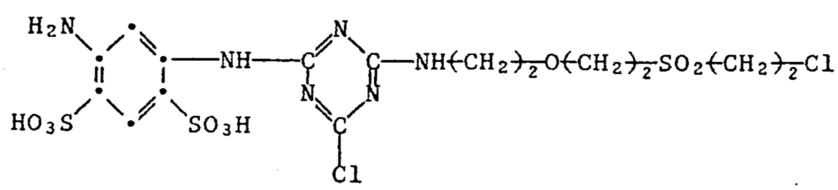

welche in der Reaktionslösung nach dem üblichen Verfahren diazotiert und mit 48 Teilen einer Kupplungskomponente der Formel

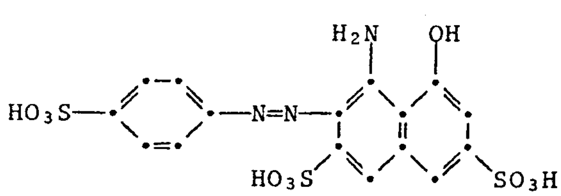

gelöst in 400 Teilen Wasser im neutralen bis schwach alkalischen Bereich gekuppelt wird.

Nach der Kupplung wird der Farbstoff aus der Lösung abgeschieden; er entspricht der Formel

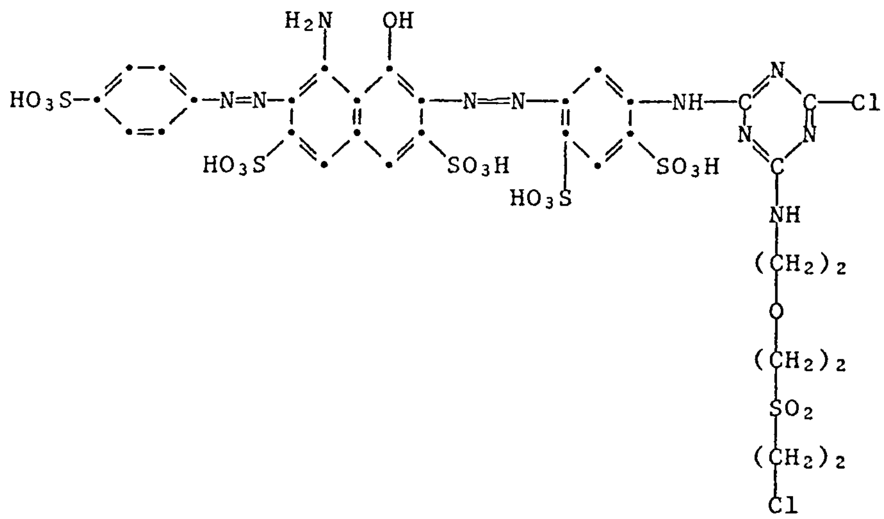

und färbt Cellulosefasern in marineblauen Tönen.

Beispiel 10:

26,8 Teile 1,3-Phenylendiamin-4,6-disulfonsäure werden in 350 Teilen Wasser bei Raumtemperatur und einem pH-Wert von 4,0 gelöst. Zu dieser Lösung werden im Laufe von 10 Minuten 14 Teile Cyanurfluorid so zugetropft, dass eine Temperatur von 0 bis 3° C und der pH-Wert von 4,0 gehalten wird. Anschliessend lässt man die Reaktionsmischung eine Stunde lang reagieren. Danach wird eine Lösung aus 37 Teilen des Amins der Formel

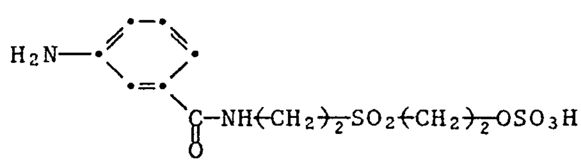

in 150 Teilen Wasser so zugegeben, dass eine Temperatur von 0 bis 5° C und der pH-Wert bei 4 bis 5 gehalten wird. Dann lässt man mit steigender Temperatur bis 20° C und gleichzeitigem Anstieg des pH-Wertes bis 6,0 die Reaktionsmischung zu Ende reagieren. Nach etwa einer Stunde erhält man als Zwischenprodukt die Verbindung der Formel

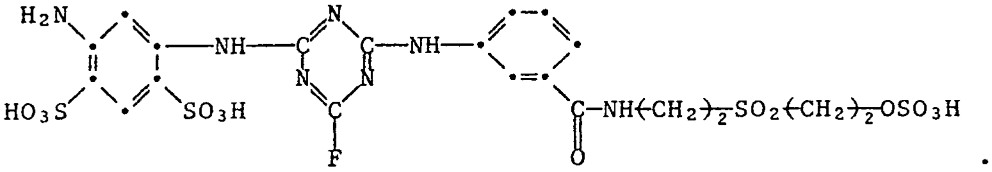

Diese wird in der Reaktionslösung nach dem üblichen Verfahren diazotiert und mit 40 Teilen einer Kupplungskomponente der Formel

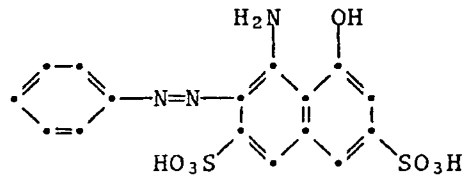

gelöst in 450 Teilen Wasser im neutralen bis schwach alkalischen Bereich gekuppelt.

Nach der Kupplung wird der Farbstoff aus der Lösung abgeschieden; er entspricht der Formel

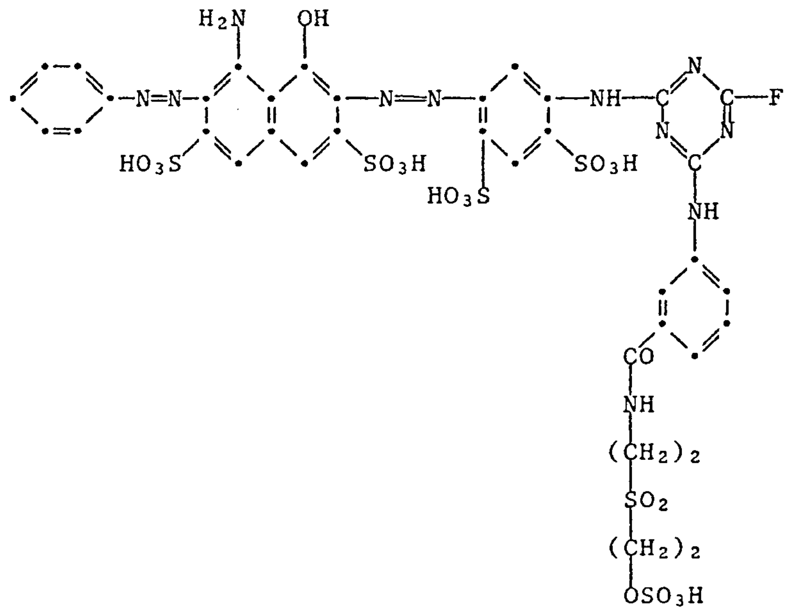

und färbt Cellulosefasern in marineblauen Tönen.

Analog zu den in den Beispielen 1 bis 10 beschriebenen Verfahren können auch die in der folgenden Tabelle aufgeführten Farbstoffe der Nrn. 11 bis 62 hergestellt werden. Die Farbstoffe färben Cellulosefasern in den in der dritten Spalte angegebenen Tönen.

| Bsp. Nr. | Farbstoff | Farbton |
|---|---|---|
| 11 | 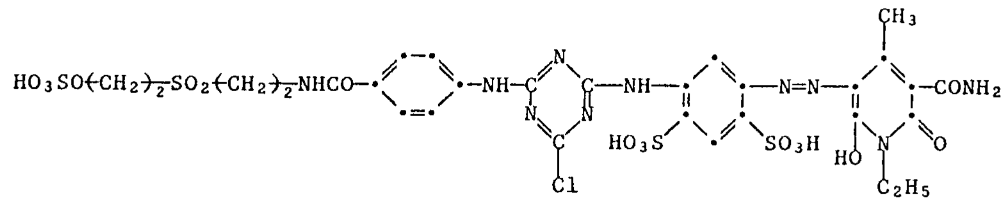 | grünstichiges Gelb |
| 12 | 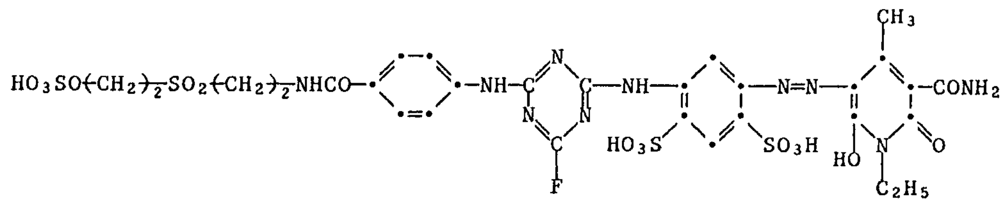 | grünstichiges Gelb |
| 13 | 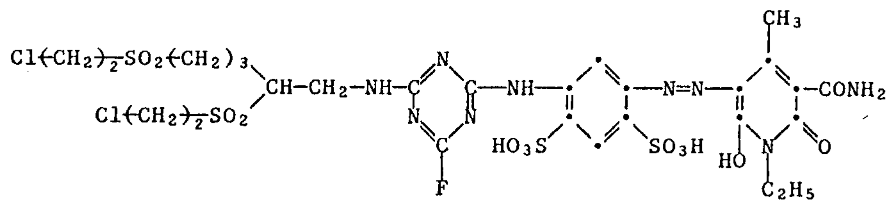 | grünstichiges Gelb |
| 14 | 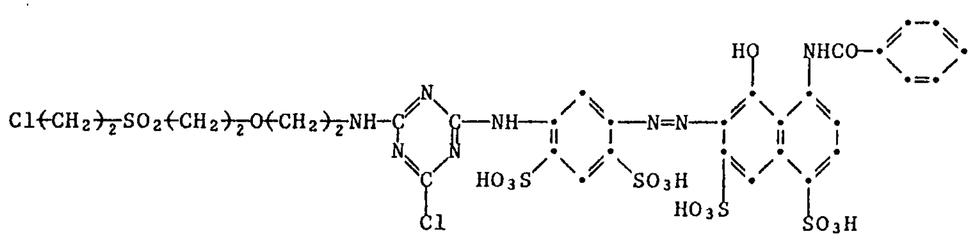 | Scharlachrot |

| Bsp Nr. | Farbstoff | Farbton |
|---|---|---|
| 15 | 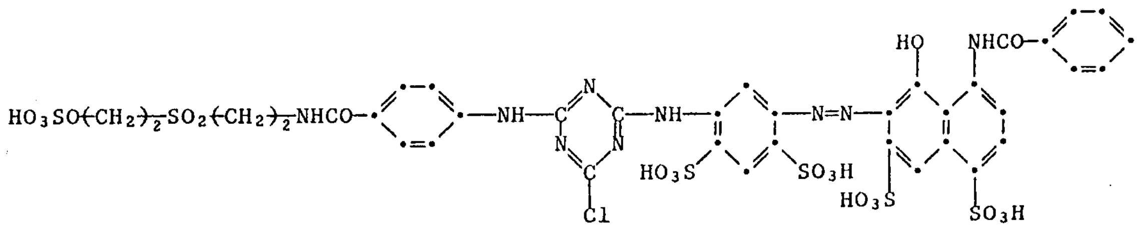 | Scharlachrot |
| 16 | 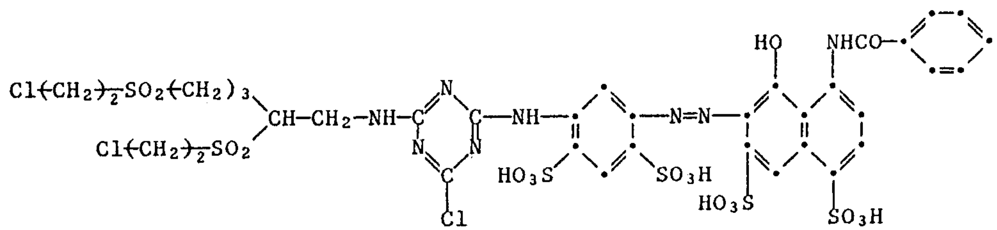 | Scharlachrot |
| 17 | 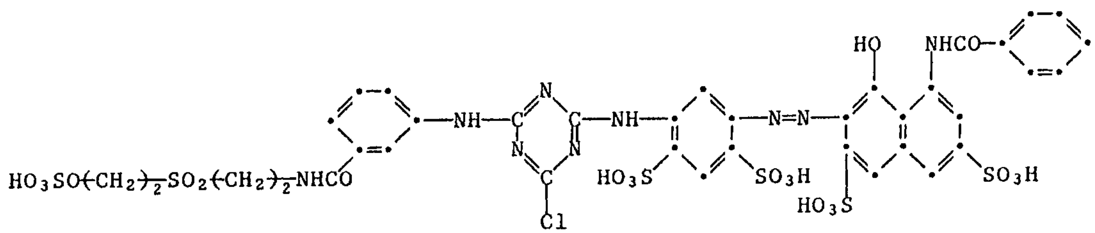 | Rot |
| 18 | 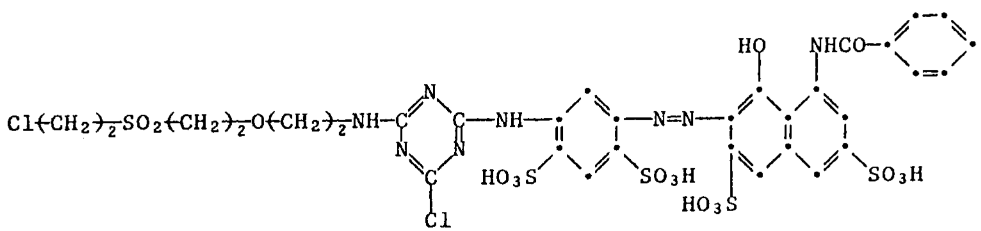 | Rot |

| Bsp. Nr. | Farbstoff | Farbton |
|---|---|---|
| 19 | 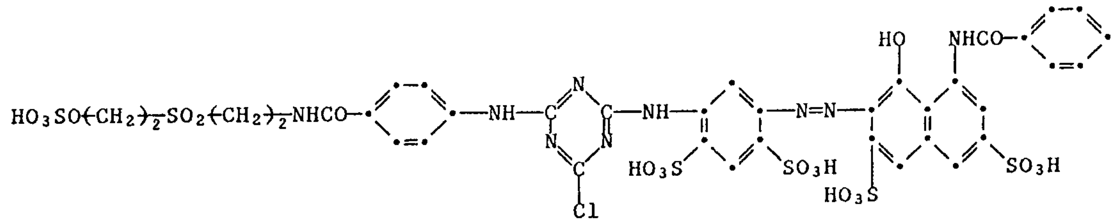 | Rot |
| 20 | 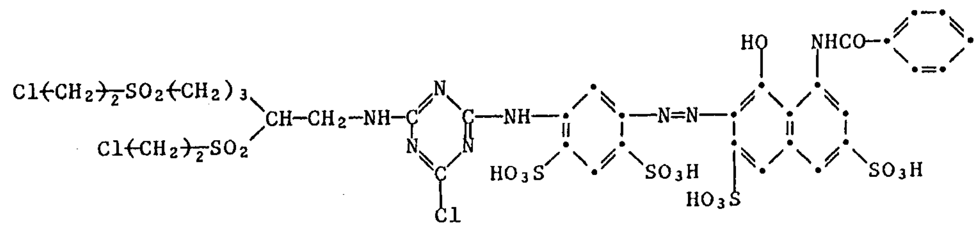 | Rot |
| 21 | 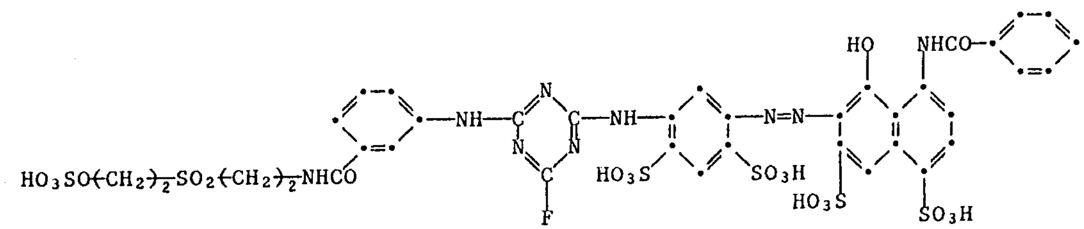 | Scharlachrot |
| 22 | 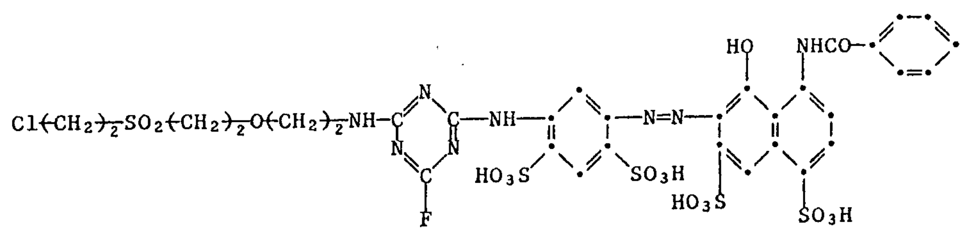 | Scharlachrot |

| Bsp. Nr. | Farbstoff | Farbton |
|---|---|---|
| 23 | 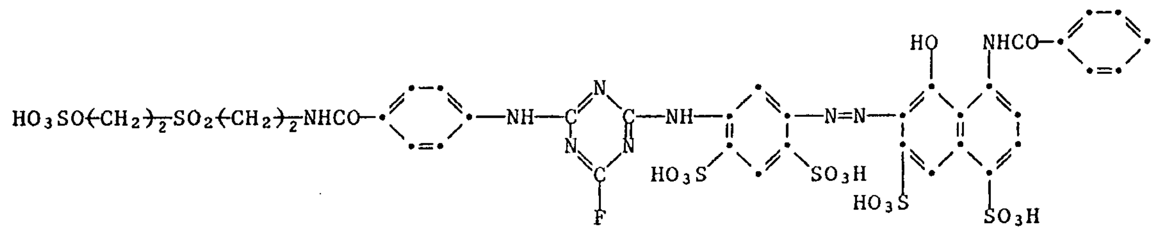 | Scharlachrot |
| 24 | 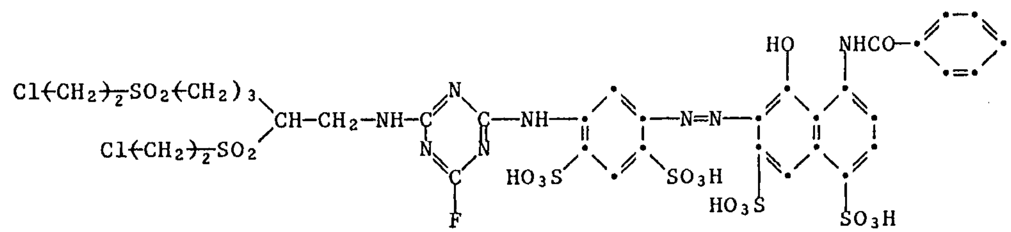 | Scharlachrot |
| 25 | 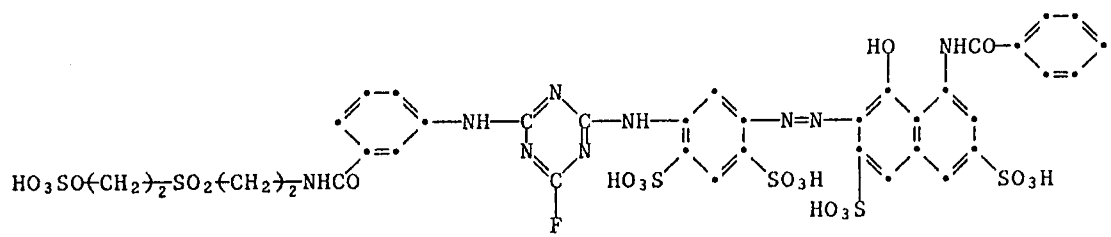 | Rot |
| 26 | 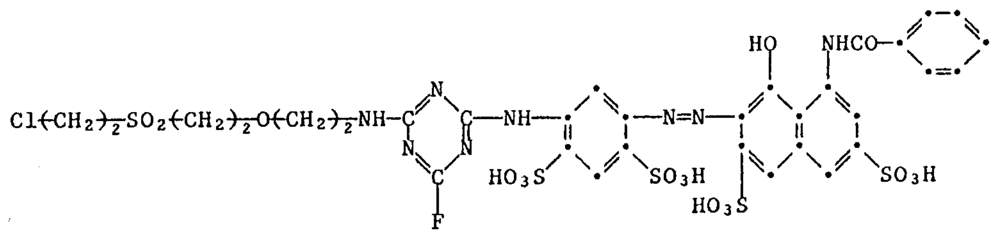 | Rot |

| Bsp. Nr. | Farbstoff | Farbton |
|---|---|---|
| 27 | 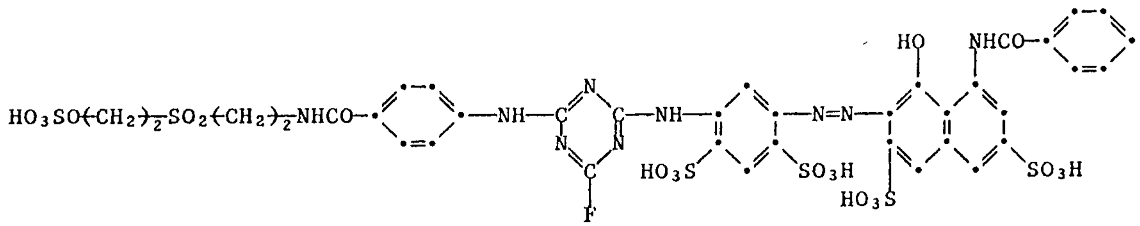 | Rot |
| 28 | 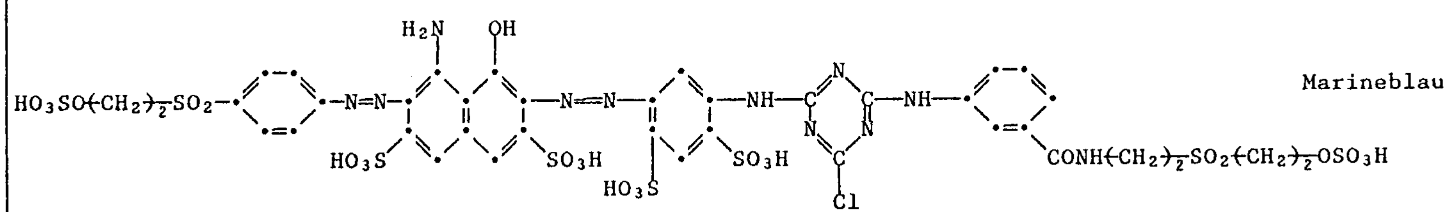 | Marineblau |
| 29 | 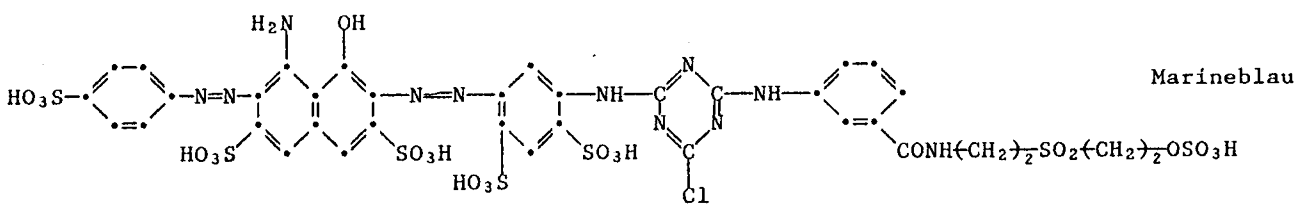 | Marineblau |
| 30 | 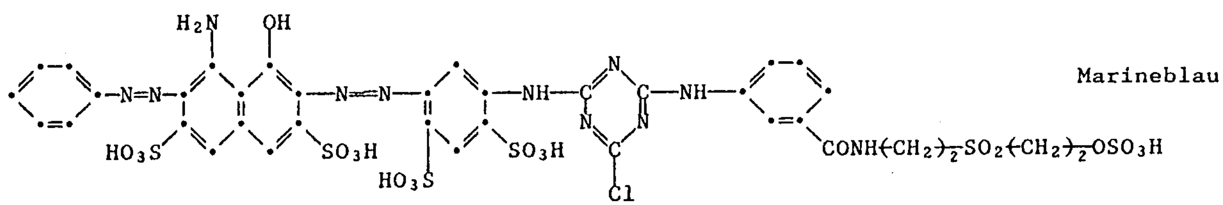 | Marineblau |

| Bsp. Nr. | Farbstoff | Farbton |
|---|---|---|
| 31 | 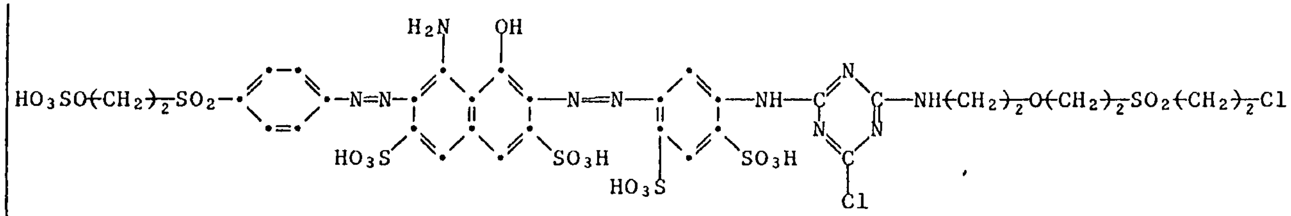 | Marineblau |
| 32 | 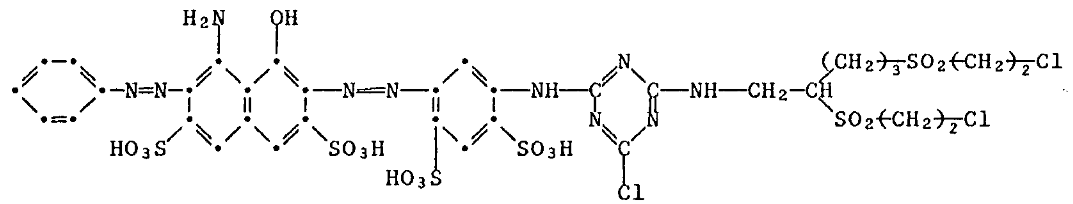 | Marineblau |
| 33 | 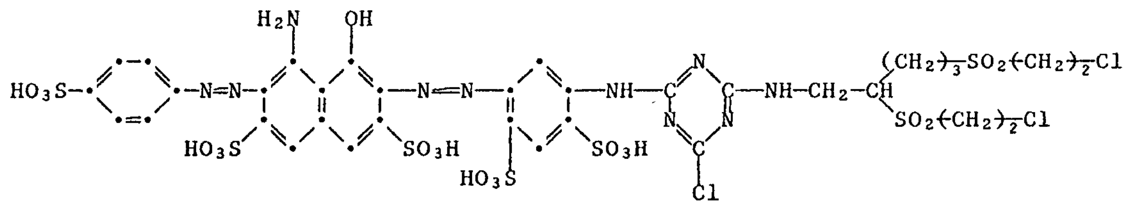 | Marineblau |
| 34 | 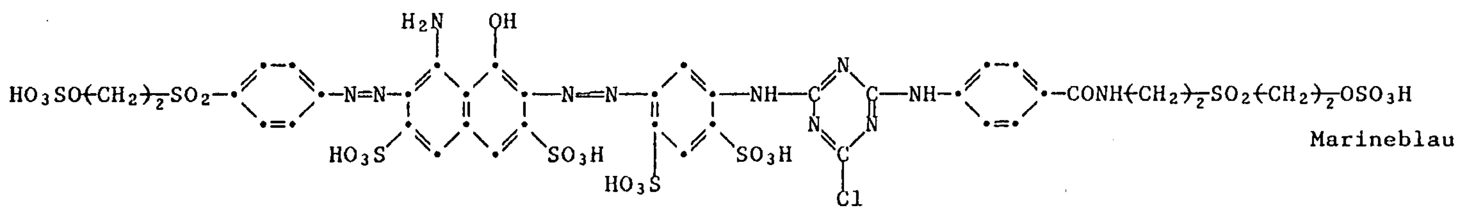 | Marineblau |

| Bsp. Nr. | Farbstoff | Farbton |
|---|---|---|
| 35 | 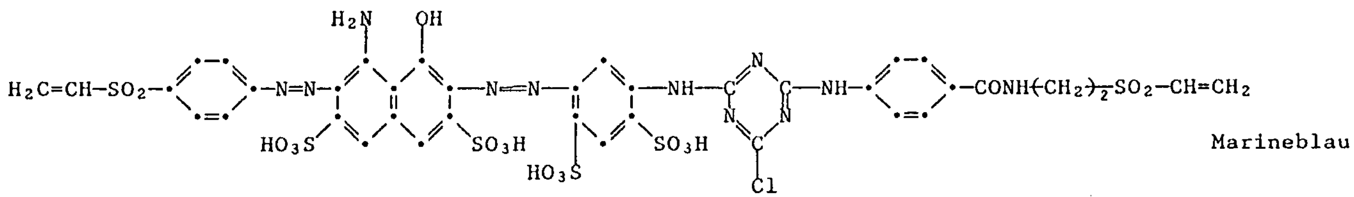 | Marineblau |
| 36 | 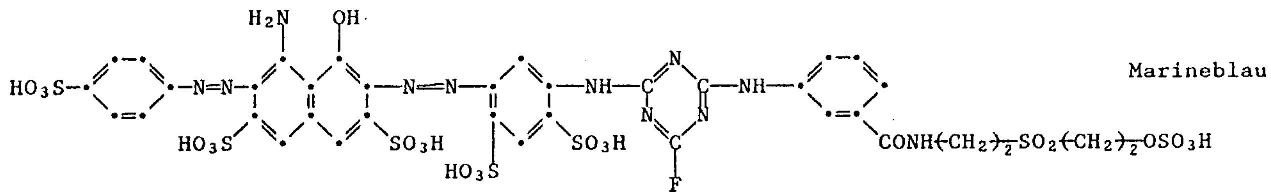 | Marineblau |
| 37 | 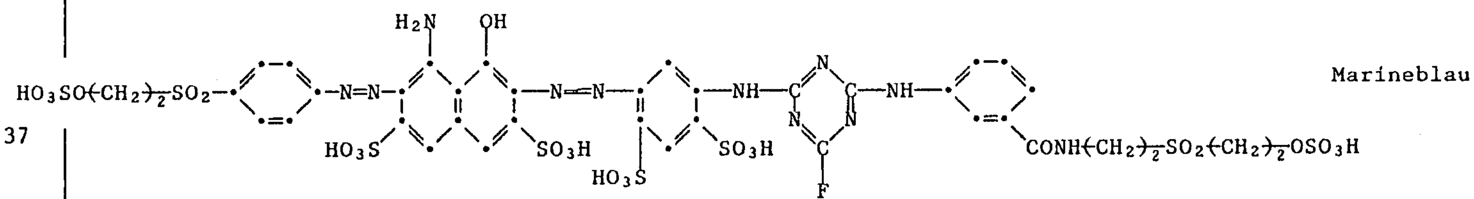 | Marineblau |
| 38 | 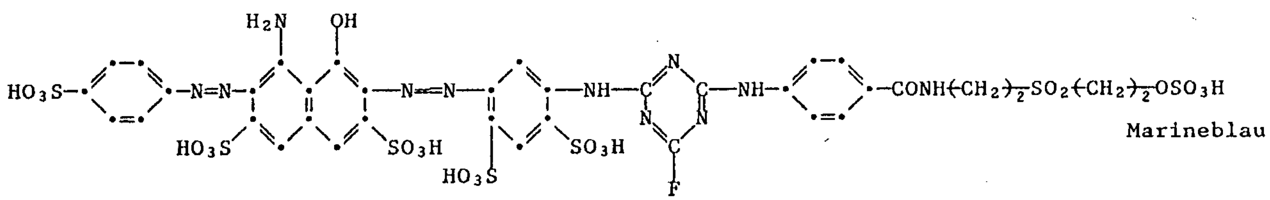 | Marineblau |

| Bsp. Nr. | Farbstoff | Farbton |
|---|---|---|
| 39 | 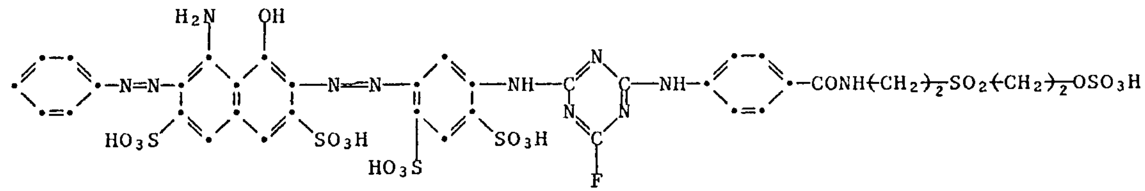 | Marineblau |
| 40 | 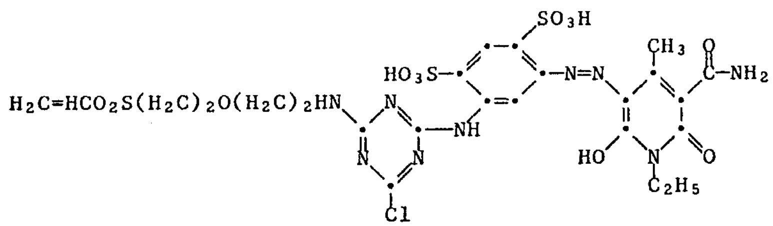 | grünstichiges Gelb |
| 41 | 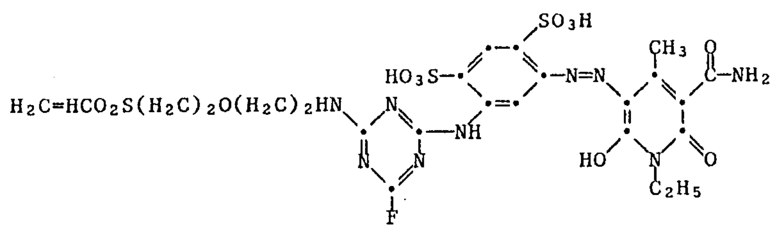 | grünstichiges Gelb |
| 42 | 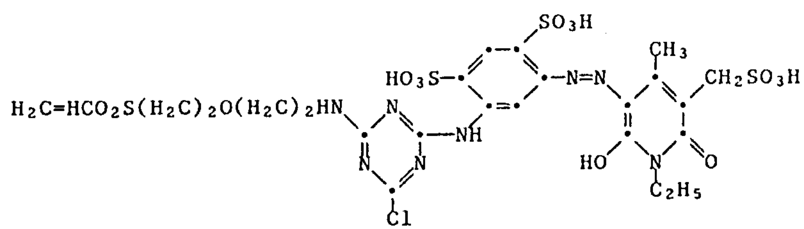 | grünstichiges Gelb |

| Bsp. Nr. | Farbstoff | Farbton |
|---|---|---|
| 43 | 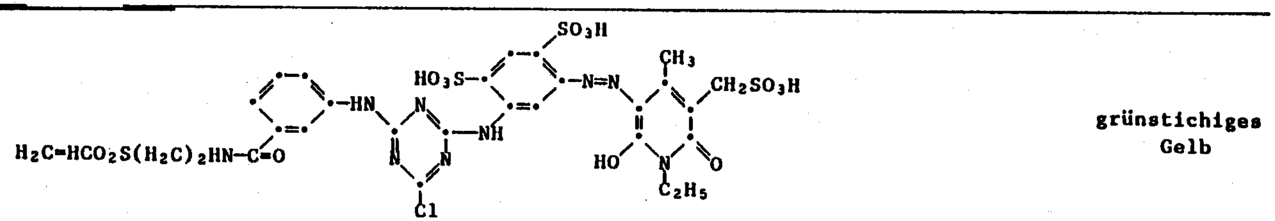 | grünstichiges Gelb |
| 44 | 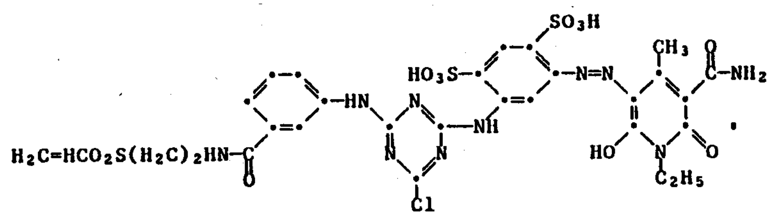 | grünstichiges Gelb |
| 45 | 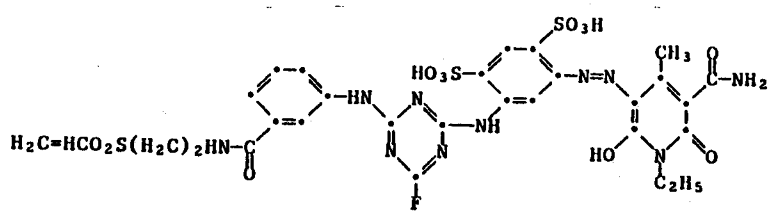 | grünstichiges Gelb |
| 46 | 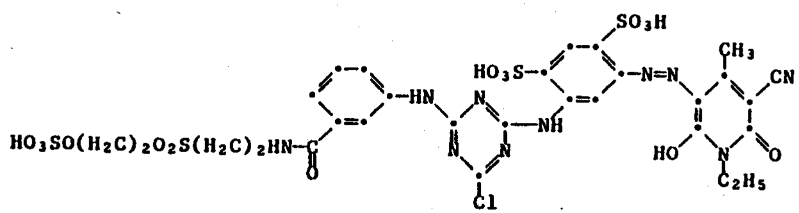 | grünstichiges Gelb |

| Bsp- Nr. | Farbstoff | Farbton |
|---|---|---|
| 47 | 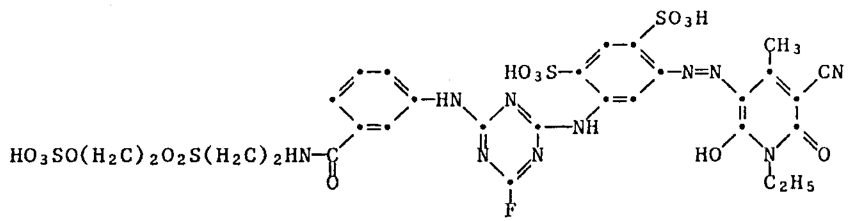 | grünstichiges Gelb |
| 48 | 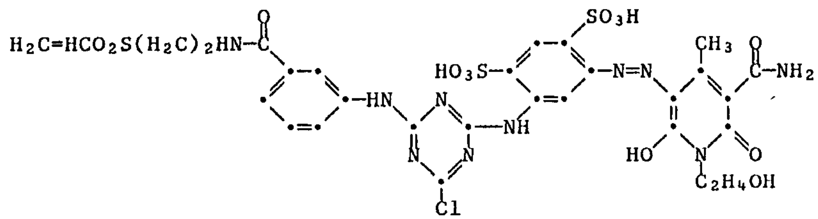 | grünstichiges Gelb |
| 49 | 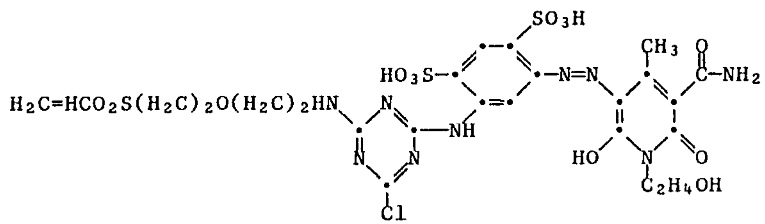 | grünstichiges Gelb |
| 50 | 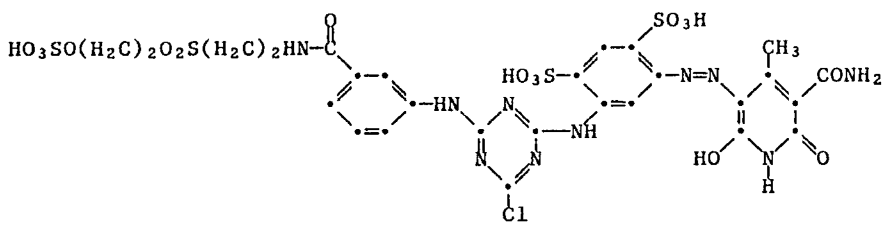 | grünstichiges Gelb |

| Bsp. Nr. | Farbstoff | Farbton |
|---|---|---|
| 51 | 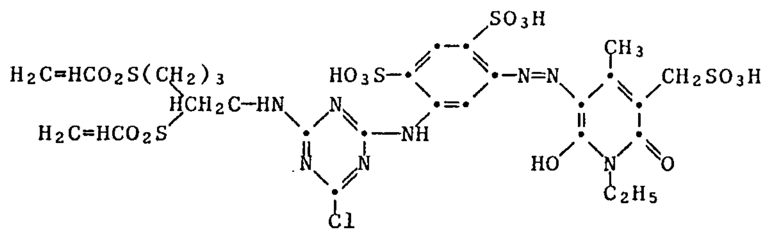 | grünstichiges Gelb |
| 52 | 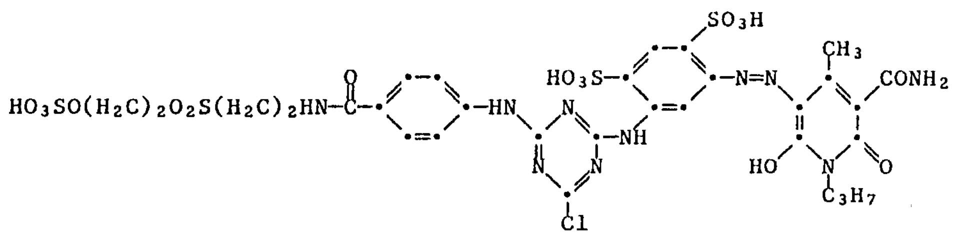 | grünstichiges Gelb |

| Bsp. Nr. | Farbstoff | Farbton |
|---|---|---|
| *53 | 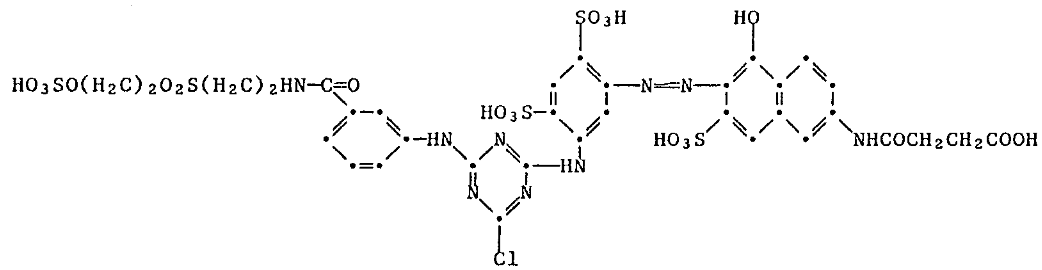 | Orange |
| 54 | 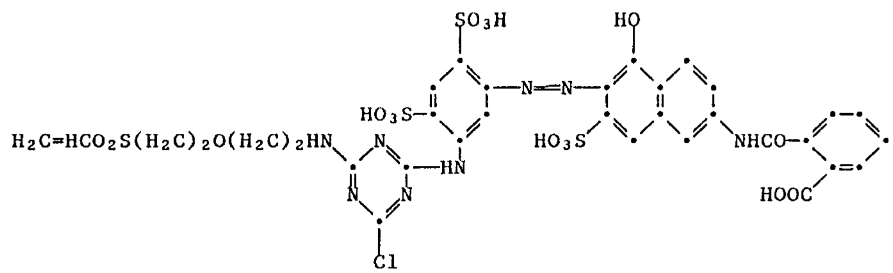 | Orange |
| 55 | 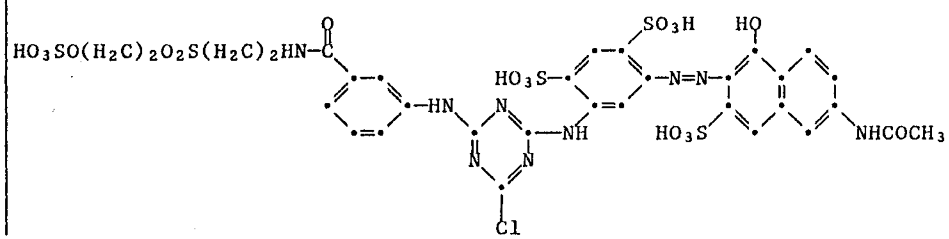 | Orange |

| Bsp. Nr. | Farbstoff | Farbton |
|---|---|---|
| 56 | 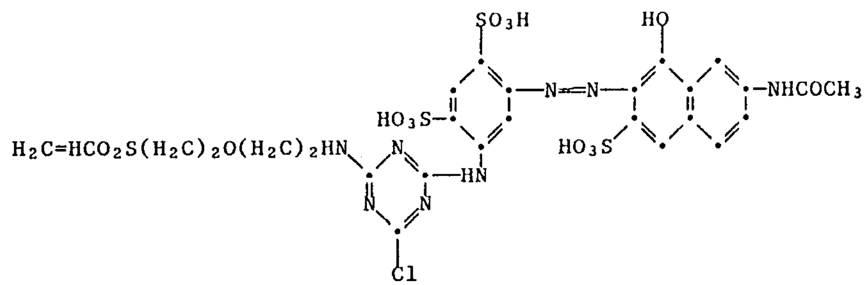 | Scharlachrot |
| 57 | 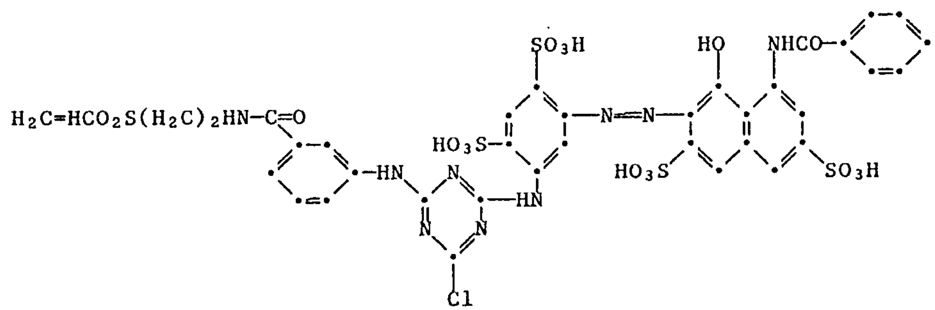 | Rot |
| 58 | 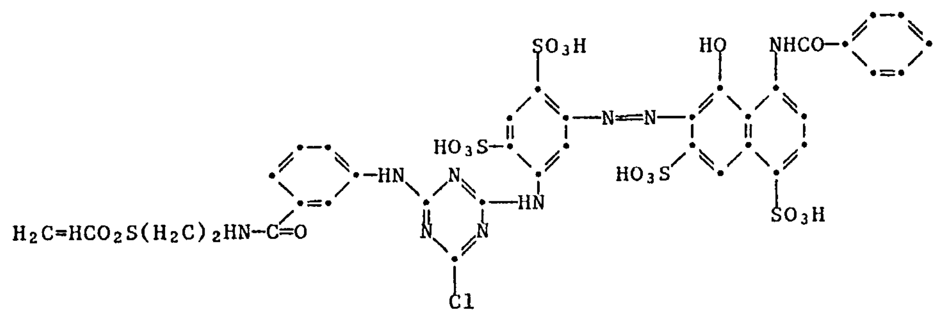 | Scharlachrot |

| Bsp. Nr. | Farbstoff | Farbton |
|---|---|---|
| 59 | 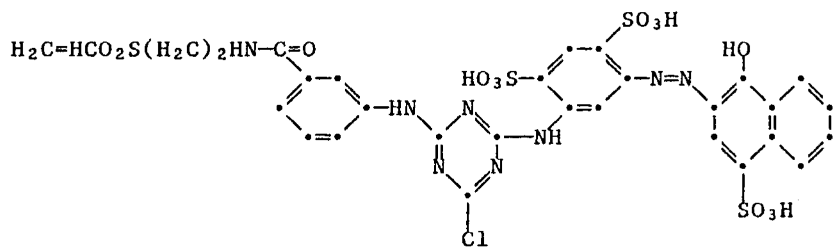 | rotstichiges Orange |
| 60 | 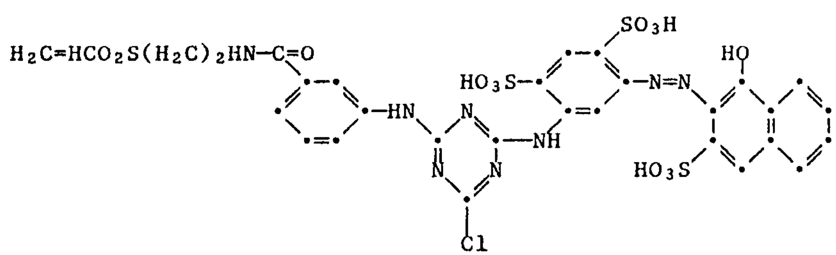 | rotstichiges Orange |

| Bsp. Nr. | Farbstoff | Farbton |
|---|---|---|
| 61 | 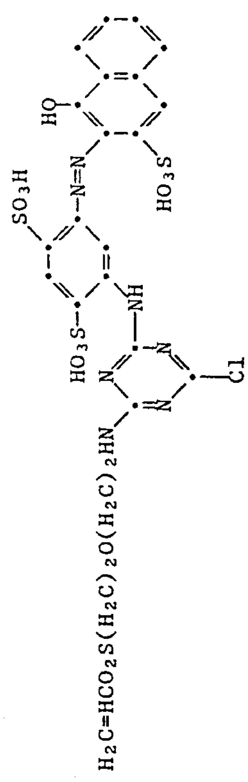 | rotstichiges Orange |
| 62 | 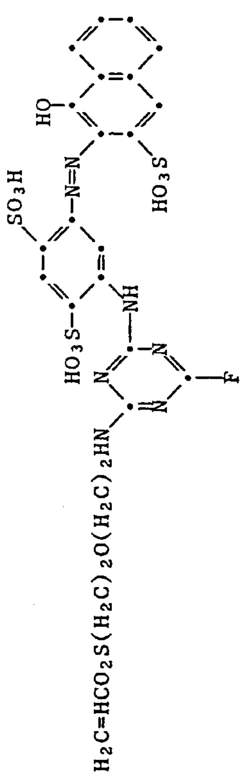 | rotstichiges Orange |

Färbevorschrift I

2 Teile des gemäss Beispiel 1 erhaltenen Farbstoffes werden in 400 Teilen Wasser gelöst; dazu gibt man 1500 Teile einer Lösung, die pro Liter 53 g Natriumchlorid enthält. In dieses Färbebad geht man bei

40° C mit 100 Teilen eines Baumwollgewebes ein. Nach 45 Minuten werden 100 Teile einer Lösung, die pro Liter 16 g Natriumhydroxyd und 20 g kalzinierte Soda enthält, zugegeben. Die Temperatur des Färbebades wird weitere 45 Minuten bei 40° C gehalten. Danach wird die gefärbte Ware gespült, während einer Viertelstunde mit einem nichtionogenen Waschmittel kochend geseift, nochmals gespült und getrocknet.

Färbevorschrift II

2 Teile des gemäss Beispiel 1 erhaltenen Reaktivfarbstoffes werden in 400 Teilen Wasser gelöst; dazu gibt man 1500 Teile einer Lösung, die pro Liter 53 g Natriumchlorid enthält. In dieses Färbebad geht man bei 35° C mit 100 Teilen eines Baumwollgewebes ein. Nach 20 Minuten werden 100 Teile einer Lösung, die pro Liter 16 g Natriumhydroxyd und 20 g kalziniertes Soda enthält, zugegeben. Die Temperatur des Färbebades wird weitere 15 Minuten bei 35° C gehalten. Danach wird die Temperatur innerhalb von 20 Minuten auf 60° C erhöht. Die Temperatur wird weitere 35 Minuten bei 60° C gehalten. Danach wird gespült, während einer Viertelstunde mit einem nichtionogenen Waschmittel kochend geseift, nochmals gespült und getrocknet.

Färbevorschrift III

8 Teile des gemäss Beispiel 1 erhaltenen Reaktivfarbstoffes werden in 400 Teilen Wasser gelöst; dazu gibt man 1400 Teile einer Lösung, die pro Liter 100 g Natriumsulfat enthält. In dieses Färbebad geht man bei 25° C mit 100 Teilen eines Baumwollgewebes ein. Nach 10 Minuten werden 200 Teile einer Lösung, die pro Liter 150 g Trinatriumphosphat enthält, zugegeben. Danach wird die Temperatur des Färbebades innerhalb 10 Minuten auf 60° C erhöht. Die Temperatur wird weitere 90 Minuten auf 60° C gehalten. Danach wird gespült, während einer Viertelstunde mit einem nichtionogenen Waschmittel kochend geseift, nochmals gespült und getrocknet.

Färbevorschrift IV

4 Teile des gemäss Beispiel 1 erhaltenen Reaktivfarbstoffes werden in 50 Teilen Wasser gelöst. Dazu gibt man 50 Teile einer Lösung, die pro Liter 5 g Natriumhydroxyd und 20 g kalziniertes Soda enthält. Mit der erhaltenen Lösung wird ein Baumwollgewebe foulardiert, so dass es um 70 % seines Gewichtes zunimmt, und dann auf eine Kaule aufgewickelt. Das Baumwollgewebe wird so während 3 Stunden bei Raumtemperatur gelagert. Danach wird die gefärbte Ware gespült, während einer Viertelstunde mit einem nichtionogenen Waschmittel kochend geseift, nochmals gespült und getrocknet.

Färbevorschrift V

6 Teile des gemäss Beispiel 1 erhaltenen Reaktivfarbstoffes werden in 50 Teilen Wasser gelöst. Dazu gibt man 50 Teile einer Lösung, die pro Liter 16 g Natriumhydroxyd und 0,04 Liter Wasserglas (38° Bé) enthält. Mit der erhaltenen Lösung wird ein Baumwollgewebe foulardiert, so dass es um 70 % seines Gewichtes zunimmt, und dann auf eine Kaule aufgewickelt. Das Baumwollgewebe wird so während 10 Stunden bei Raumtemperatur gelagert. Danach wird die gefärbte Ware gespült, während einer Viertelstunde mit einem nichtionogenen Waschmittel kochend geseift, nochmals gespült und getrocknet.

Färbevorschrift VI

2 Teile des gemäss Beispiel 1 erhaltenen Reaktivfarbstoffes werden unter Zusatz von 0,5 Teilen m-nitrobenzolsulfonsaurem Natrium in 100 Teilen Wasser gelöst. Mit der erhaltenen Lösung wird ein Baumwollgewebe imprägniert, so dass es um 75 % seines Gewichtes zunimmt, und dann getrocknet. Dann imprägniert man das Gewebe mit einer 20° C warmen Lösung, die pro Liter 4 g Natriumhydroxyd und 300 g Natriumchlorid enthält, quetscht auf 75 % Gewichtszunahme ab, dämpft die Färbung während 30 Sekunden bei 100 bis 102° C, spült, seift während einer Viertelstunde in einer 0,3%igen kochenden Lösung eines nichtionogenen Waschmittels, spült und trocknet.

Färbevorschrift VII

In 2000 Teile Wasser werden 2 Teile des Farbstoffes von Beispiel 1, 160 Teile Natriumsulfat und als Puffermittel 4 Teile $Na_2HPO_4 \cdot 12H_2O$ und 1 Teil $KH_2PO_4$ gegeben, so dass ein Färbebad mit einem pH von

7 erhalten wird. In dieses Bad werden 100 Teile einer Wirkware aus nicht-mercerisierter Baumwolle eingetaucht. Im Laufe von 30 Minuten wird die Temperatur des Bades auf 130°C gebracht, und bei dieser Temperatur wird 60 Minuten lang gefärbt. Danach wird die gefärbte Ware aus dem Bad genommen, mit Wasser gewaschen, geseift, wieder mit Wasser gewaschen und getrocknet. Es wird eine gelbe Färbung erhalten.

Färbevorschrift VIII

In 2000 Teile Wasser werden 2 Teile des Farbstoffes von Beispiel 6, 2 Teile des bekannten wasserunlöslichen Anthrachinonfarbstoffes der Formel

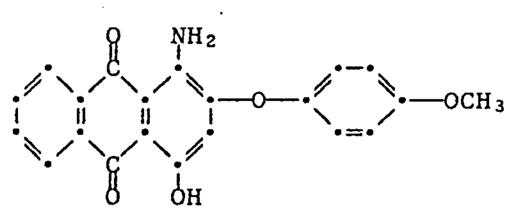

,

120 Teile Natriumsulfat und als Puffermittel 4 Teile $Na_2HPO_4 \cdot 12H_2O$ und 1 Teil $KH_2PO_4$ gegeben. In das so erhaltene Färbebad werden 100 Teile eines Polyester/Baumwoll-Mischgewebes (50:50) eingetaucht, und im Laufe von 30 Minuten wird die Temperatur des Bades auf 130°C gebracht, bei welcher 60 Minuten gefärbt wird. Dann wird das gefärbte Gewebe aus dem Bad genommen, mit Wasser gewaschen, geseift, erneut mit Wasser gewaschen und getrocknet. Es wird ein egal rot gefärbtes Gewebe erhalten. Das Färbebad wird vor Beginn und während des Färbens auf pH 7 gehalten.

Druckvorschrift I

3 Teile des gemäss Beispiel 1 erhaltenen Reaktivfarbstoffes werden unter schnellem Rühren in 100 Teile einer Stammverdickung, enthaltend 50 Teile 5%ige Natriumalginatverdickung, 27,8 Teile Wasser, 20 Teile Harnstoff, 1 Teil m-nitrobenzolsulfonsaures Natrium sowie 1,2 Teile Natriumhydrogencarbonat, eingestreut. Mit der so erhaltenen Druckpaste bedruckt man ein Baumwollgewebe, trocknet und dämpft den erhaltenen bedruckten Stoff 2 Minuten bei 102°C in gesättigtem Dampf. Das bedruckte Gewebe wird dann gespült, gegebenenfalls kochend geseift und nochmals gespült, und anschliessend getrocknet.

Druckvorschrift II

5 Teile des gemäss Beispiel 1 erhaltenen Reaktivfarbstoffes werden unter schnellem Rühren in 100 Teile einer Stammverdickung, enthaltend 50 Teile 5%ige Natriumalginatverdickung, 36,5 Teile Wasser, 10 Teile Harnstoff, 1 Teil m-nitrobenzolsulfonsaures Natrium sowie 2,5 Teile Natriumhydrogencarbonat, eingestreut. Mit der so erhaltenen Druckpaste, deren Stabilität den technischen Anforderungen entspricht, bedruckt man ein Baumwollgewebe, trocknet und dämpft den erhaltenen bedruckten Stoff 8 Minuten bei 102°C in gesättigtem Dampf. Das bedruckte Gewebe wird dann gespült, gegebenenfalls kochend geseift und nochmals gespült, und anschliessend getrocknet.

**Patentansprüche**

**1.** Reaktivfarbstoffe der Formel

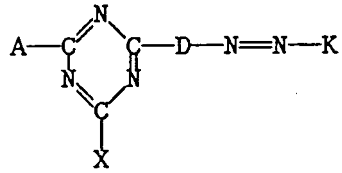

(1),

worin D ein Rest der Formel

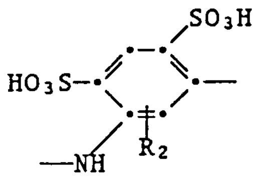

(2)

wobei der Triazinrest in Formel (1) an die -NH- Gruppe von D gebunden ist; $R_2$ Wasserstoff, $C_{1-4}$-Alkyl, $C_{1-4}$-Alkoxy, Halogen oder Carboxy;
K ein Rest der Formel

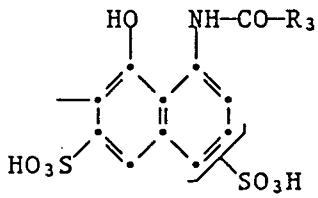

(3a),

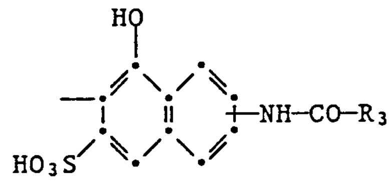

(3b),

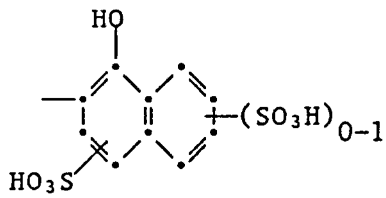

(3c),

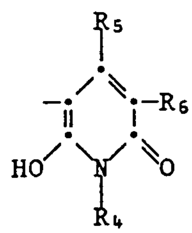

(3d),

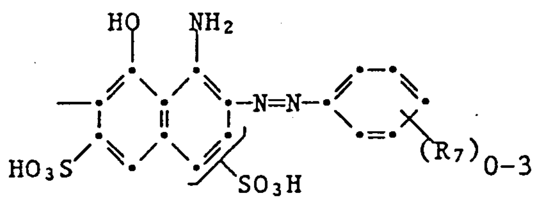

oder (3e),

$R_3$ $C_{1-4}$-Alkyl, das durch Halogen, Hydroxy, Cyan, $C_{1-4}$-Alkoxy, $C_{1-4}$-Alkoxycarbonyl, Carboxy, Sulfamoyl, Sulfo oder Sulfato substituiert sein kann, 2-Carboxyvinyl, Phenyl, das durch $C_{1-4}$-Alkyl, $C_{1-4}$-Alkoxy, Nitro, Halogen, Carbamoyl, Carboxy oder Sulfo substituiert sein kann, Phenyl-$C_{1-4}$-alkyl oder Phenoxy-$C_{1-4}$-alkyl; $R_4$ Wasserstoff oder $C_{1-4}$-Alkyl, das durch Hydroxy oder -$NH_2$ substituiert sein kann; $R_5$ Wasserstoff oder $C_{1-4}$-Alkyl; und $R_6$ Wasserstoff, Cyan, Carbamoyl, Carboxy oder Sulfomethyl ist; $R_7$ für 0 bis 3 Substituenten aus der Gruppe $C_{1-4}$-Alkyl, $C_{1-4}$-Alkoxy, Halogen, Nitro, Carbamoyl, Sulfamoyl, Carboxy, Sulfo, Sulfomethyl und einem der unten definierten Reste der Formel -$SO_2$-Z, unabhängig voneinander, steht; X Fluor, Chlor, Brom, Sulfo, $C_{1-4}$-Alkylsulfonyl, Phenylsulfonyl oder Carboxypyridinium; A ein Rest der Formel

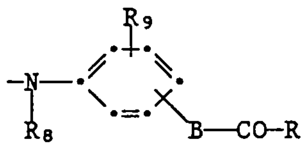

(4),

$R_8$ Wasserstoff oder Alkyl mit 1 bis 4 Kohlenstoffatomen, das durch Halogen, Hydroxy, Cyan, $C_{1-4}$-Alkoxy, $C_{1-4}$-Alkoxycarbonyl, Carboxy, Sulfamoyl, Sulfo oder Sulfato substituiert sein kann; $R_9$ Wasserstoff, $C_{1-4}$-Alkyl, $C_{1-4}$-Alkoxy, Halogen, Carboxy oder Sulfo; B eine direkte Bindung;
R ein Rest der Formel

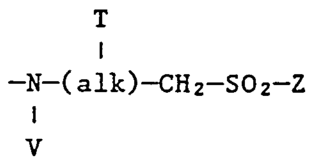

(5a),

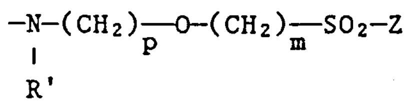

(5b),

$-NH-(alk')-NH-(alk')-SO_2-Z$ (5c),

oder 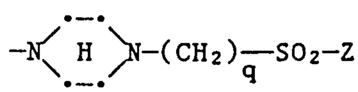 (5d),

Z β-Sulfatoäthyl, β-Thiosulfatoäthyl, β-Phosphatoäthyl, β-Acyloxyäthyl, β-Halogenäthyl oder Vinyl; alk ein Alkylenrest mit 1 bis 7 C-Atomen oder dessen verzweigte Isomere; T Wasserstoff, Chlor, Brom, Fluor, Hydroxy, Sulfato, Acyloxy mit 1 bis 4 C-Atomen, Cyano, Carboxy, Alkoxycarbonyl mit 1 bis 5 C-Atomen, Carbamoyl, oder ein Rest $-SO_2-Z$, worin Z die oben angegebene Bedeutung hat;
V Wasserstoff oder ein Alkylrest mit 1 bis 4 C-Atomen, der durch Carboxy- oder Sulfogruppen oder durch deren Derivate, Alkoxygruppen mit 1 oder 2 C-Atomen, Halogen oder Hydroxy substituiert sein kann; oder ein Rest

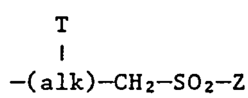

(5e),

worin Z, alk und T die angegebenen Bedeutungen haben; R' Wasserstoff oder $C_{1-6}$-Alkyl; alk' unabhängig voneinander Polymethylenreste mit 2 bis 6 C-Atomen oder deren verzweigte Isomere; und m = 1 bis 6, p = 1 bis 6 und q = 1 bis 6 ist, oder A ein direkt an den Triazinring gebundener Rest der Formel (5a), (5b), (5c) oder (5d) ist, worin Z, alk, T, V, R', alk', m, p und q die angegebenen Bedeutungen haben.

**2.** Reaktivfarbstoffe gemäss Anspruch 1, der Formel

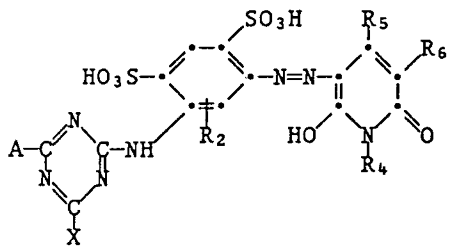

(15)

worin $R_2$, $R_4$, $R_5$, $R_6$, X und A die in Anspruch 1 angegebenen Bedeutungen haben.

**3.** Reaktivfarbstoffe gemäss Anspruch 1, der Formel

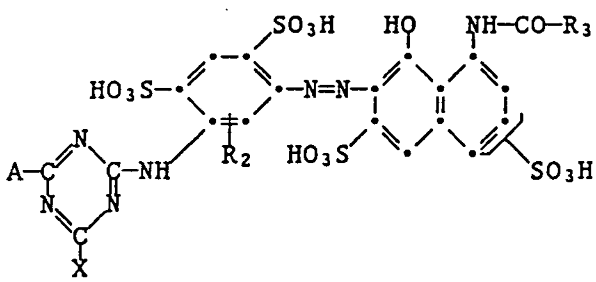

(16)

worin $R_2$, $R_3$, X und A die in Anspruch 1 angegebenen Bedeutungen haben.

**4.** Reaktivfarbstoffe gemäss Anspruch 1, der Formel

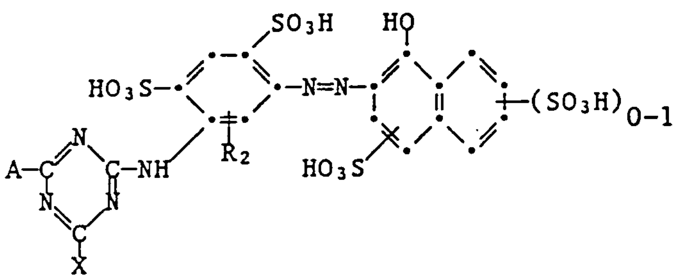

(17)

worin $R_2$, X und A die in Anspruch 1 angegebenen Bedeutungen haben.

**5.** Reaktivfarbstoffe gemäss Anspruch 1, der Formel

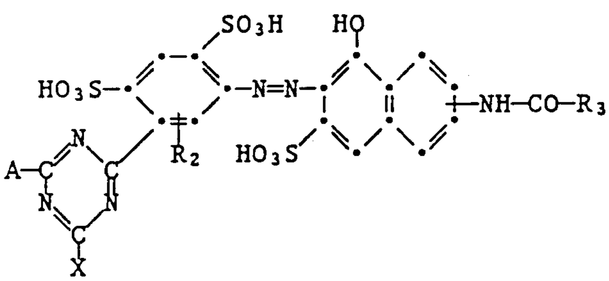

(18)

worin $R_2$, $R_3$, X und A die in Anspruch 1 angegebenen Bedeutungen haben.

**6.** Reaktivfarbstoffe gemäss Anspruch 1, der Formel

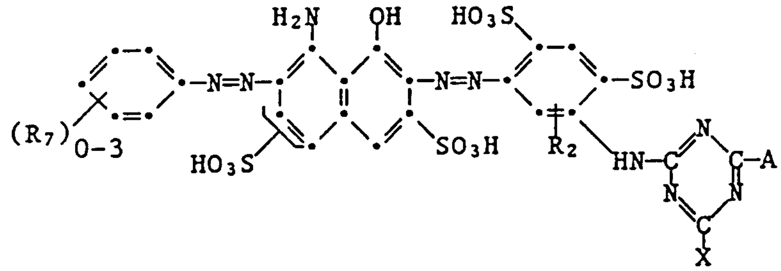

(19)

worin $R_2$, $R_7$, X und A die in Anspruch 1 angegebenen Bedeutungen haben.

**7.** Reaktivfarbstoffe gemäss Anspruch 6, worin der Index von $R_7$ = 1 ist und $R_7$ ein Rest $-SO_2-Z$ ist, worin Z die unter Formel (1) angegebene Bedeutung hat.

**8.** Reaktivfarbstoffe gemäss Anspruch 1, worin R bzw. A ein Rest der Formel

$-NHCH_2CH_2SO_2CH_2CH_2OSO_3H$ (6a),
$-NHCH_2CH_2SO_2CH_2CH_2Cl$ (6b),
$-NHCH_2CH_2SO_2CH=CH_2$ (6c),
$-NHCH_2CH_2CH_2SO_2CH=CH_2$ (6d),
$-NHCH_2CH_2OCH_2CH_2SO_2CH_2CH_2Cl$ (6e),
$-NHCH_2CH_2OCH_2CH_2SO_2CH=CH_2$ (6f),

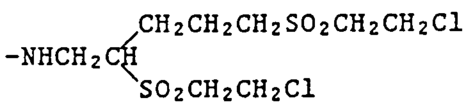

(6g),

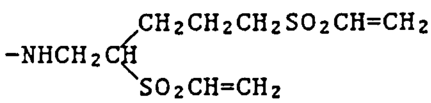

(6h),

oder 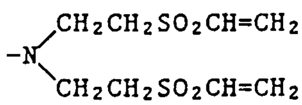

(6i)

ist.

**9.** Verfahren zur Herstellung von Reaktivfarbstoffen der Formel (1), dadurch gekennzeichnet, dass man einen entsprechenden Aminoazo- oder Aminodisazo-Farbstoff oder ein Farbstoffvorprodukt, ein s-Triazin der Formel

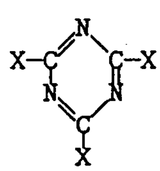

(7)

und ein Amin der Formel

H-A (8)

in beliebiger Folge miteinander umsetzt, wobei X und A die in Anspruch 1 angegebenen Bedeutungen haben, oder, im Falle der Verwendung von Farbstoffvorprodukten, die erhaltenen Zwischenprodukte in die gewünschten Monohalogentriazinfarbstoffe überführt und gegebenenfalls eine weitere Umwandlungsreaktion anschliesst.

**10.** Verfahren gemäss Anspruch 9, dadurch gekennzeichnet, dass man einen Aminoazo- oder Aminodisazo-Farbstoff mit einem s-Triazin der Formel (7) kondensiert, und die erhaltene Triazinverbindung anschliessend mit einem Amin der Formel (8) kondensiert.

**11.** Verfahren gemäss Anspruch 9, dadurch gekennzeichnet, dass man eine Komponente eines Aminoazo- oder Aminodisazo-Farbstoffes, die einen Rest der Formel

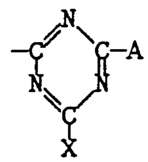

(9)

enthält, mit einer zur Herstellung des Farbstoffes benötigten zweiten Komponente umsetzt.

**12.** Verwendung der Reaktivfarbstoffe gemäss Anspruch 1, zum Färben oder Bedrucken hydroxylgruppenhaltiger oder amidgruppenhaltiger Fasermaterialien.

**13.** Verwendung gemäss Anspruch 12, zum Färben oder Bedrucken von Cellulosefasern, insbesondere Baumwolle.

**Claims**

**1.** Reactive dyes of the formula

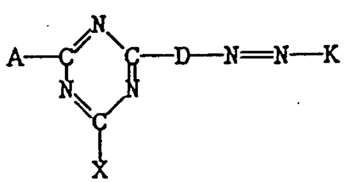

(1),

in which D is a radical of the formula

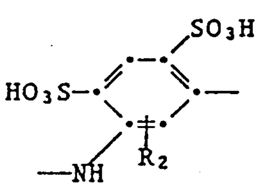

(2),

the triazine radical in formula (1) being bonded to the -NH- group of D; $R_2$ is hydrogen, $C_{1-4}$alkyl, $C_{1-4}$alkoxy, halogen or carboxyl; K is a radical of the formula

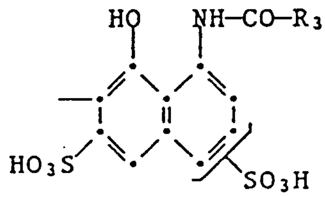

(3a),

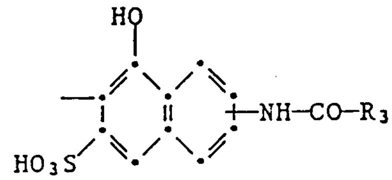

(3b),

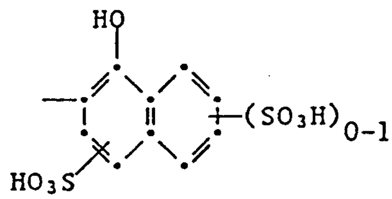

(3c),

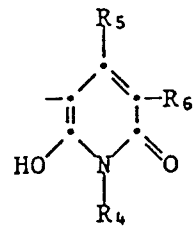

(3d),

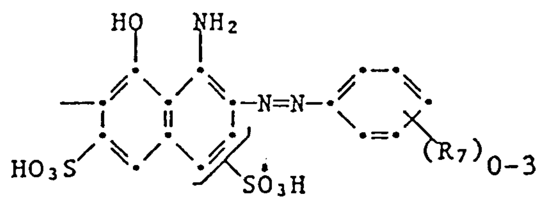

or (3e),

$R_3$ is $C_{1-4}$alkyl which can be substituted by halogen, hydroxyl, cyano, $C_{1-4}$alkoxy, $C_{1-4}$alkoxycarbonyl, carboxyl, sulfamoyl, sulfo or sulfato, or is 2-carboxyvinyl, phenyl, which can be substituted by $C_{1-4}$alkyl, $C_{1-4}$alkoxy, nitro, halogen, carbamoyl, carboxyl or sulfo, or is phenyl$C_{1-4}$alkyl or phenoxy $C_{1-4}$alkyl; $R_4$ is hydrogen or $C_{1-4}$alkyl which can be substituted by hydroxyl or $-NH_2$; $R_5$ is hydrogen or $C_{1-4}$alkyl; and $R_6$ is hydrogen, cyano, carbamoyl, carboxyl or sulfomethyl; $R_7$ is 0 to 3 substituents from the group consisting of $C_{1-4}$alkyl, $C_1$-$C_4$alkoxy, halogen, nitro, carbamoyl, sulfamoyl, carboxyl, sulfo, sulfomethyl and one of the radicals of the formula $-SO_2-Z$ defined below; X is fluorine, chlorine, bromine, sulfo, $C_{1-4}$alkylsulfonyl, phenylsulfonyl or carboxypyridinium; A is a radical of the formula

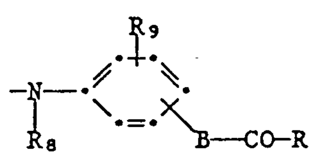

(4)

$R_8$ is hydrogen or alkyl having 1 to 4 carbon atoms which can be substituted by halogen, hydroxyl, cyano, $C_1$-$C_4$alkoxy, $C_{1-4}$alkoxycarbonyl, carboxyl, sulfamoyl, sulfo or sulfato; $R_9$ is hydrogen, $C_{1-4}$alkyl, $C_{1-4}$alkoxy, halogen, carboxyl or sulfo; B is a direct bond; R is a radical of the formula

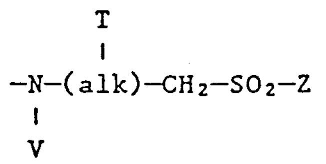

(5a),

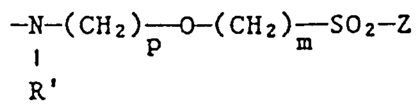

(5b),

$-NH-(alk')-NH-(alk')-SO_2-Z$ (5c),

or

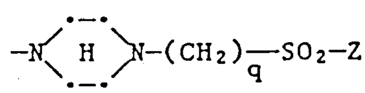

(5d),

Z is β-sulfatoethyl, β-thiosulfatoethyl, β-phosphatoethyl, β-acyloxyethyl, β-haloethyl or vinyl; alk is an alkylene radical having 1 to 7 C atoms or branched isomers thereof; T is hydrogen, chlorine, bromine, fluorine, hydroxyl, sulfato, acyloxy having 1 to 4 C atoms, cyano, carboxyl, alkoxycarbonyl having 1 to 5 C atoms, carbamoyl, or is a radical $-SO_2-Z$ in which Z is as defined above; V is hydrogen or an alkyl radical having 1 to 4 C atoms which can be substituted by carboxyl or sulfo groups or by derivatives thereof, alkoxy groups having 1 or 2 C atoms, halogen or hydroxyl; or is a radical

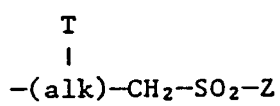

(5e),

in which Z, alk and T are as defined above; R' is hydrogen or $C_{1-6}$alkyl; alk', independently of one another, is/are polymethylene radicals having 2 to 6 C atoms or branched isomers thereof; and m is 1 to 6, p is 1 to 6 and q is 1 to 6, or A is a radical of the formula (5a), (5b), (5c) or (5d) directly bonded to the triazine ring, in which Z, alk, T, V, R', alk', m, p and q are as defined above.

**2.** Reactive dyes according to claim 1 of the formula

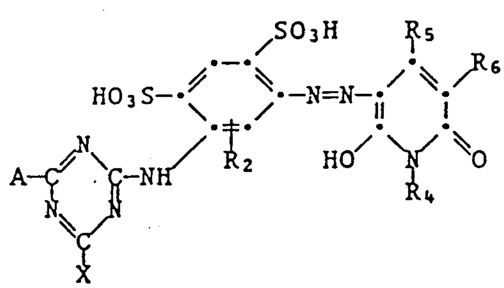

(15)

in which $R_2$, $R_4$, $R_5$, $R_6$, X and A are as defined in claim 1.

**3.** Reactive dyes according to claim 1 of the formula

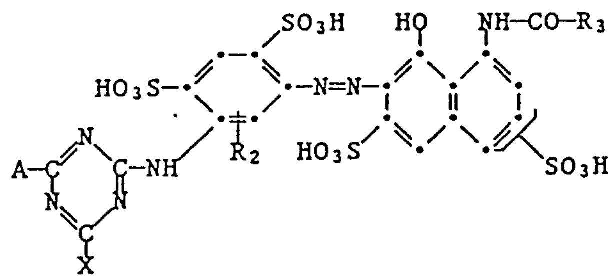

(16)

in which $R_2$, $R_3$, X and A are as defined in claim 1.

4. Reactive dyes according to claim 1 of the formula

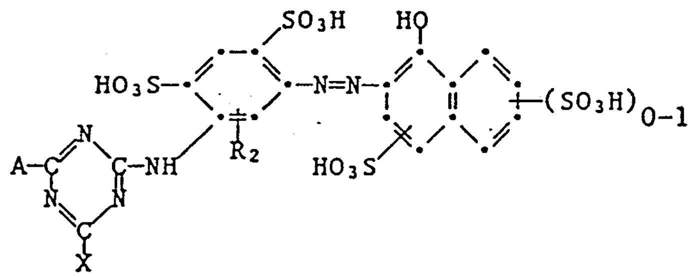

(17)

in which $R_2$, X and A are as defined in claim 1.

5. Reactive dyes according to claim 1 of the formula

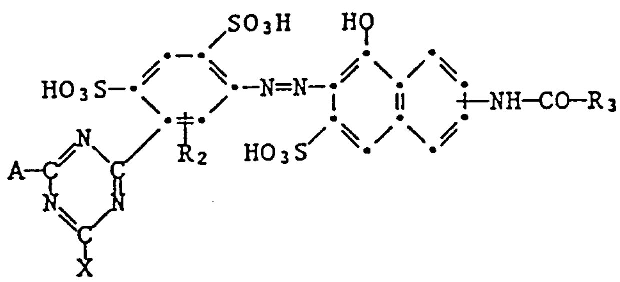

(18)

in which $R_2$, $R_3$, X and A are as defined in claim 1.

6. Reactive dyes according to claim 1 of the formula

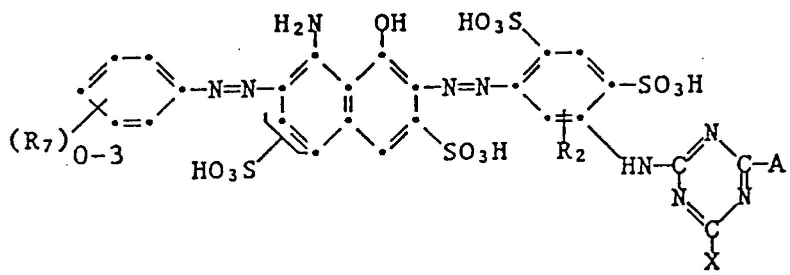

(19)

in which $R_2$, $R_7$, X and A are as defined in claim 1.

7. Reactive dyes according to claim 6 in which the index of $R_7$ is 1 and $R_7$ is an $-SO_2-Z$ radical in which Z is as defined in formula (1).

8. Reactive dyes according to claim 1, in which R or A is a radical of the formula

$-NHCH_2CH_2SO_2CH_2CH_2OSO_3H$ (6a),
$-NHCH_2CH_2SO_2CH_2CH_2Cl$ (6b),
$-NHCH_2CH_2SO_2CH=CH_2$ (6c),
$-NHCH_2CH_2CH_2SO_2CH=CH_2$ (6d),
$-NHCH_2CH_2OCH_2CH_2SO_2CH_2CH_2Cl$ (6e),
$-NHCH_2CH_2OCH_2CH_2SO_2CH=CH_2$ (6f),

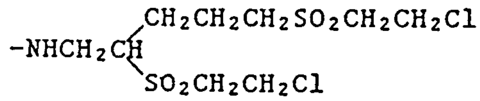 (6g),

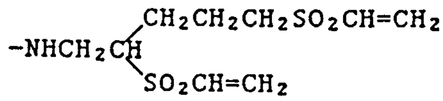 (6h),

or

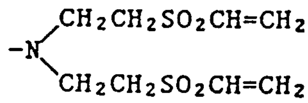 (6i)

**9.** A process for the preparation of reactive dyes in the formula (1), which comprises reacting the corresponding aminoazo or aminodisazo dye or a dye precursor, an s-triazine of the formula

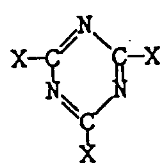 (7)

and an amine of the formula

H-A (8)

are reacted with each other in any desired order, X and A being as defined in claim 1, or, in the case where dye precursors are used, by converting the resulting intermediates to the desired monohalotriazine dyes and subjecting them, if desired, to a further conversion reaction.

**10.** A process according to claim 9, wherein an aminoazo or aminodisazo dye is condensed with an s-triazine of the formula (7) and the resulting triazine compound is subsequently condensed with an amine of the formula (8).

**11.** A process according to claim 9, wherein a component of an aminoazo or aminodisazo dye containing a radical of the formula

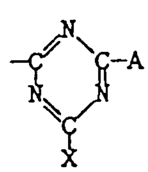 (9)

is reacted with a second component necessary for the preparation of the dye.

12. Use of the reactive dyes according to claim 1, for the dyeing or printing of hydroxyl group-containing or amido group-containing fibre materials.

13. Use according to claim 12 for the dyeing or printing of cellulose fibres, in particular cotton.

## Revendications

1. Colorants réactifs de formule

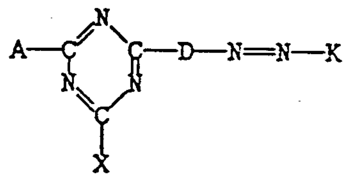

(1),

dans laquelle D est un reste de formule

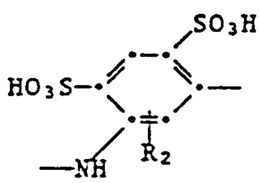

(2)

le radical triazine, dans la formule (1), étant lié au groupe -NH- de D; $R_2$ représentant un atome d'hydrogène ou d'halogène ou un groupe alkyle en $C_{1-4}$, alcoxy en $C_{1-4}$ ou carboxyle;
K représente un radical de formule

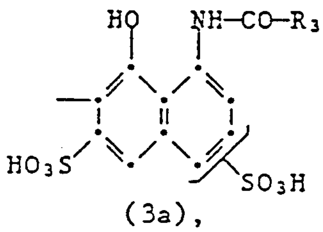

(3a),

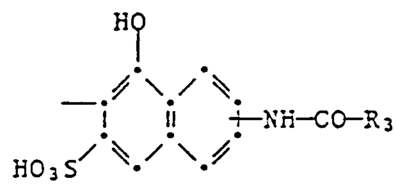

(3b),

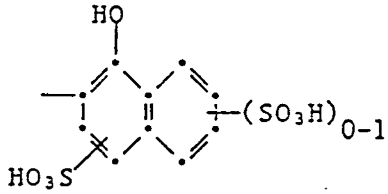

(3c),

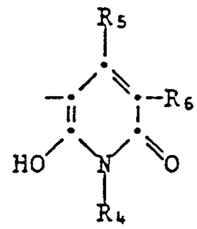

(3d),

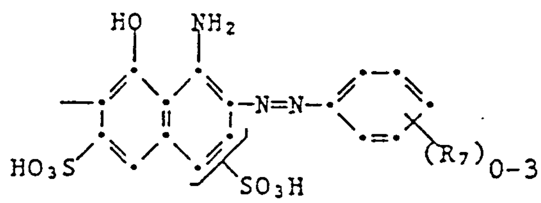

ou (3e),

$R_3$ étant un radical alkyle en $C_{1-4}$ qui peut être substitué par un atome d'halogène ou par un groupe hydroxyle, cyano, alcoxy en $C_{1-4}$, alcoxy($C_{1-4}$)-carbonyle, carboxyle, sulfamoyle, sulfo ou sulfato, un radical 2-carboxyvinyle, phényle qui peut être substitué par un atome d'halogène ou par un groupe alkyle en $C_{1-4}$, alcoxy en $C_{1-4}$, nitro, carbamoyle, carboxyle ou sulfo, un radical phénylalkyle($C_{1-4}$) ou phénoxy-alkyle($C_{1-4}$); $R_4$ étant un atome d'hydrogène ou un radical alkyle en $C_{1-4}$ qui peut être substitué par un groupe hydroxyle ou $-NH_2$; $R_5$ représentant un atome d'hydrogène ou un radical alkyle en $C_{1-4}$; et $R_6$ étant un atome d'hydrogène ou un radical cyano, carbamoyle, carboxyle ou sulfométhyle; les radicaux $R_7$ représentant, indépendamment les uns des autres, de 0 à 3 substituants choisis parmi des atomes d'halogène et des groupes alkyle en $C_{1-4}$, alcoxy en $C_{1-4}$, nitro, carbamoyle, sulfamoyle, carboxyle, sulfo, sulfométhyle et l'un des radicaux de formule $-SO_2-Z$ définis ci-dessous; X représente un atome de fluor, chlore ou brome ou un groupe sulfo, alkyl($C_{1-4}$)-sulfonyle, phénylsulfonyle ou carboxypyridinium; A est un radical de formule

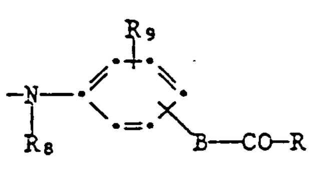

(4),

$R_8$ étant un atome d'hydrogène ou un radical alkyle ayant de 1 à 4 atomes de carbone, qui peut être substitué par un atome d'halogène ou par un groupe hydroxyle, cyano, alcoxy en $C_{1-4}$, alcoxy($C_{1-4}$)-carbonyle, carboxyle, sulfamoyle, sulfo ou sulfato; $R_9$ étant un atome d'hydrogène ou d'halogène ou un radical alkyle en $C_{1-4}$, alcoxy en $C_{1-4}$, carboxyle ou sulfo; B étant une liaison directe;
R étant un radical de formule

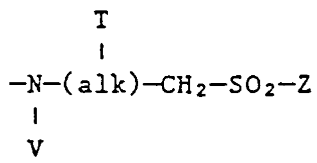 (5a),

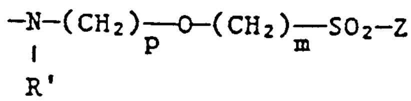 (5b),

$-NH-(alk')-NH-(alk')-SO_2-Z$ (5c),

ou 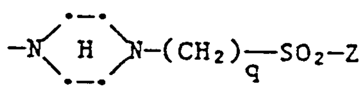 (5d),

Z représentant un groupe β-sulfatoéthyle, β-thiosulfatoéthyle, β-phosphatoéthyle, β-acyloxyéthyle, β-halogénoéthyle ou vinyle; alk représentant un radical alkylène ayant de 1 à 7 atomes de carbone ou ses isomères ramifiés; T étant un atome d'hydrogène, de chlore, de brome, de fluor ou un radical hydroxyle, sulfato, acyloxy ayant de 1 à 4 atomes de carbone, cyano, carboxyle, alcoxycarbonyle ayant de 1 à 5 atomes de carbone, carbamoyle, ou un radical $-SO_2-Z$ dans lequel Z a la signification donnée plus haut;
V représentant un atome d'hydrogène ou un radical alkyle ayant de 1 à 4 atomes de carbone, qui peut être substitué par des groupes carboxyle ou sulfo ou par des dérivés de ceux-ci, par des groupes alcoxy ayant 1 ou 2 atomes de carbone, par des atomes d'halogène ou par le groupe hydroxyle; ou un radical

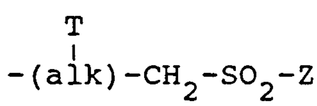 (5e)

dans lequel alk et T ont les significations indiquées;
R' représentant un atome d'hydrogène ou un groupe alkyle en $C_{1-6}$; les radicaux alk' représentant, indépendamment l'un de l'autre, des radicaux polyméthylène ayant de 2 à 6 atomes de carbone ou leurs isomères ramifiés; et m valant de 1 à 6, p valant de 1 à 6 et q Valant de 1 à 6, ou A est un radical de formule (5a), (5b), (5c) ou (5d), lié directement au cycle triazine, Z, alk, T, V, R', alk', m, p et q ayant les significations indiquées.

2. Colorants réactifs selon la revendication 1, de formule

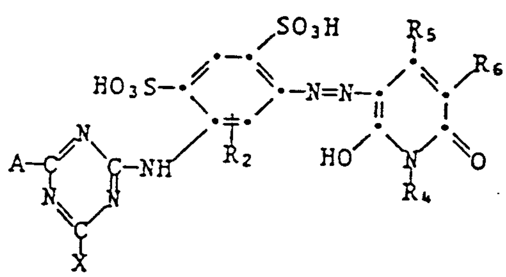 (15)

dans laquelle $R_2$, $R_4$, $R_5$, $R_6$, X et A ont les significations indiquées dans la revendication 1.

**3.** Colorants réactifs selon la revendication 1, de formule

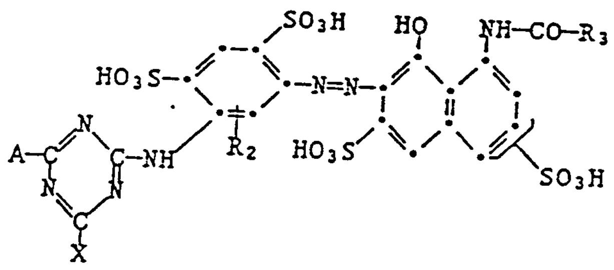

(16)

dans laquelle $R_2$, $R_3$, X et A ont les significations indiquées dans la revendication 1.

**4.** Colorants réactifs selon la revendication 1, de formule

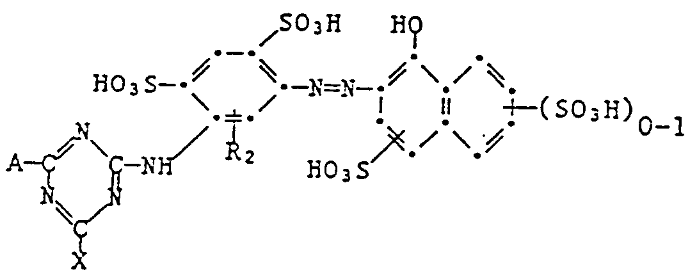

(17)

dans laquelle $R_2$, X et A ont les significations indiquées dans la revendication 1.

**5.** Colorants réactifs selon la revendication 1, de formule

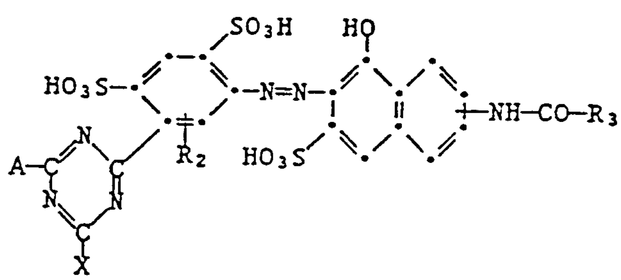

(18)

dans laquelle $R_2$, $R_3$, X et A ont les significations indiquées dans la revendication 1.

**6.** Colorants réactifs selon la revendication 1, de formule

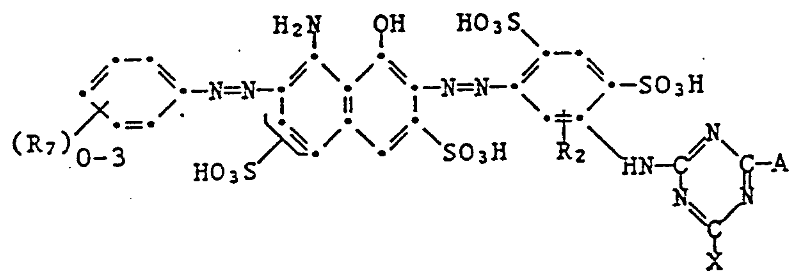

(19)

dans laquelle $R_2$, $R_7$, X et A ont les significations indiquées dans la revendication 1.

**7.** Colorants réactifs selon la revendication 6, dans lesquels l'indice de $R_7$ est 1 et $R_7$ est un radical $-SO_2-Z$, dans lequel Z a la signification indiquée sous la formule (1).

**8.** Colorants réactifs selon la revendication 1, dans lesquels R ou A est un radical de formule

$-NHCH_2CH_2SO_2CH_2CH_2OSO_3H$ (6a),
$-NHCH_2CH_2SO_2CH_2CH_2Cl$ (6b),
$-NHCH_2CH_2SO_2CH=CH_2$ (6c),
$-NHCH_2CH_2CH_2SO_2CH=CH_2$ (6d),
$-NHCH_2CH_2OCH_2CH_2SO_2CH_2CH_2Cl$ (6e),
$-NHCH_2CH_2OCH_2CH_2SO_2CH=CH_2$ (6f),

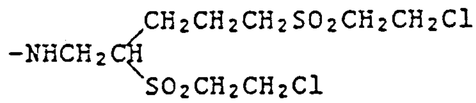 (6g),

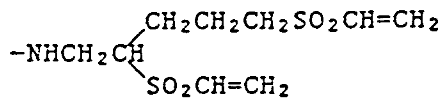 (6h),

ou 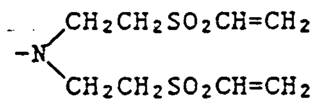 (6i)

**9.** Procédé pour la préparation de colorants réactifs de formule (1), caractérisé en ce que l'on fait réagir les uns avec les autres, en un ordre quelconque, un colorant aminoazoïque ou aminodisazoïque approprié ou un précurseur de colorant approprié, une triazine-s de formule

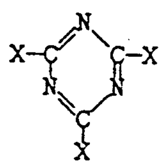 (7)

et une amine de formule

H-A (8),

X et A ayant les significations indiquées dans la revendication 1, ou, dans le cas de l'utilisation de précurseurs de colorants, on convertit les produits intermédiaires obtenus en les colorants monohalogénotriazine recherchés, et éventuellement fait suite une autre réaction de conversion.

**10.** Procédé selon la revendication 9, caractérisé en ce que l'on condense un colorant aminoazoïque ou aminodisazoïque avec une triazine-s de formule (7) et on condense ensuite le composé triazine obtenu avec une amine de formule (8).

**11.** Procédé selon la revendication 9, caractérisé en ce que l'on fait réagir un composant d'un colorant aminoazoïque ou aminodisazoïque, qui contient un radical de formule

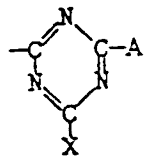

(9)

avec un second composant requis pour la préparation du colorant.

**12.** Utilisation des colorants réactifs selon la revendication 1, pour la teinture ou l'impression de matériaux fibreux contenant des groupes hydroxyle ou contenant des groupes amido.

**13.** Utilisation selon la revendication 12, pour la teinture ou l'impression de fibres cellulosiques en particulier du coton.